# EUROPEAN PATENT APPLICATION

(11) **EP 2 490 454 A2**
(43) Date of publication of application: **22.08.2012**
(21) Application number: 12000988.1
(22) Date of filing: 15.02.2012
(51) Int. Cl.: H04N 21/431, H04N 21/462, H04N 21/4722, H04N 21/4782, H04N 21/482

(54) **Display apparatus for performing virtual channel browsing and controlling method thereof**

(30) Priority: 16.02.2011 US 201161443264 P; 29.03.2011 US 201161469078 P; 11.04.2011 KR 20110033167; 20.04.2011 KR 20110036665
(71) Applicant: LG Electronics Inc., Yeongdeungpo-gu Seoul 150-721 (KR)
(72) Inventor: Lee, Soonkyo, Gyeonggi-do 451-862 (KR); Kim, Ryoung, Gyeonggi-do 451-862 (KR)
(74) Representative: Frenkel, Matthias Alexander

(57) **Abstract**

A display apparatus for performing virtual channel browsing and controlling method thereof are disclosed, by which hardware design can be simplified using a virtual channel browsing scheme and by which a channel browsing data processing speed can be increased.

## Description

### BACKGROUND OF THE INVENTION

### Field of the Invention

The present invention relates to a display apparatus, and more particularly, to a display apparatus for performing virtual channel browsing and controlling method thereof. Although this invention is suitable for a wide scope of applications, it is particularly suitable for a network TV, a smart TV, an HBBTV (hybrid broadcast broadband television), an internet TV, a web TV, an IPTV (internet protocol television) and the like.

### Discussion of the Related Art

First of all, a display apparatus is a device equipped with a function of receiving and processing a user-viewable broadcast video for example. Recently, there is an ongoing transition from analog broadcasting to digital broadcasting globally as well as in Korea.

Digital broadcasting means the broadcasting that transmits digital video and audio signals. Compared to analog broadcasting, digital broadcasting is strong against external nose to have small data loss, is advantageous in error correction, has high resolution, and provides a clear screen. Moreover, digital broadcasting enables an interactive service unlike analog broadcasting. Meanwhile, there is an ongoing discussion on a smart TV equipped with a combination of a video display device function and a multimedia device function.

In digital broadcasting environment, the number of TV-selectable channels ranges between tens and hundreds and is exponentially increasing irrespective of countries. To handle the rapidly increasing number of channels, many efforts are being made to research and develop channel browsers or channel browsing solutions.

Besides, if a currently discussed network or smart TV is introduced, the number of processable contents will continue increasing as well as the number of viewable channels. Therefore, the demand for solution development is rising to facilitate a user of the TV to check various contents and channel informations.

### SUMMARY OF THE INVENTION

Accordingly, this invention is directed to a display apparatus for performing virtual channel browsing and controlling method thereof that substantially obviate one or more problems due to limitations and disadvantages of the related art.

An object of the present invention is to define a solution, by which hardware design can be simplified using a virtual channel browsing scheme and by which a channel browsing data processing speed can be increased.

Another object of the present invention is to design a user interface, by which changed states of all channels as channel browsing targets can be easily checked.

A further object of the present invention is to design a protocol, by which a channel updated in the course of implementing a virtual channel browsing function can be quickly checked and by which necessary information can be received only.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a display apparatus, which activates a channel browsing, according to the present invention may include the steps of receiving A/V data of a broadcast program via a 1^{st} path of a broadcast network, receiving at least one event information currently broadcasted on each channel and a per-channel thumbnail image corresponding to the event via a 2^{nd} path of an internet network, displaying video data included in the received AV data on a 1^{st} region within a screen of the display apparatus, displaying a 1^{st} OSD (on screen display) including the received per-channel thumbnail image on a second region within the screen, collecting at least one event corresponding to a preset reference, and displaying a 2^{nd} OSD on the 2^{nd} region within the screen to display a thumbnail image of a channel carrying the collected event and thumbnail images of the rest of channels in a manner of discriminating the thumbnail image of the channel carrying the collected event from the thumbnail images of the rest of the channels.

In another aspect of this invention, a display apparatus for activating a channel browsing according to the present invention may include a broadcast network interface receiving A/V data of a broadcast program via a 1^{st} path of a broadcast network, an internet network interface receiving at least one event information currently broadcasted on each channel and a per-channel thumbnail image corresponding to the event via a 2^{nd} path of an internet network, a display unit displaying video data included in the received AV data on a 1^{st} region within a screen of the display apparatus, the display unit displaying a 1^{st} OSD (on screen display) including the received per-channel thumbnail image on a second region within the screen, a collector collecting at least one event corresponding to a preset reference, and a controller displaying a 2^{nd} OSD on the 2^{nd} region within the screen to display a thumbnail image of a channel carrying the collected event and thumbnail images of the rest of channels in a manner of discriminating the thumbnail image of the channel carrying the collected event from the thumbnail images of the rest of the channels.

In a further aspect of this invention, a computer-readable recording medium according to the present invention may include a program for executing the above display apparatus controlling method recorded therein.

Accordingly, the present invention provides the following effects and/or advantages.

First of all, according to one embodiment of the present invention, a compact hardware design may be enables using a virtual channel browsing scheme and a channel browsing data speed may be increased.

Secondly, according to another embodiment of the present invention, a user interface may be provided to easily check changed states of all channels as channel browsing targets.

Thirdly, according to a further embodiment of the present invention, a channel updated in the course of implementing a virtual channel browsing function may be quickly checked and necessary information may be received only.

Besides, the effects of the present invention will be explained in detail later in this specification.

It is to be understood that both the foregoing general description and the following detailed description of this invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of components of a display apparatus according to one embodiment of the present invention;

FIG. 2 is a block diagram of components of a display apparatus according to another embodiment of the present invention;

FIG. 3 is an internal block diagram of a control unit shown in FIG. 2;

FIG. 4 is a diagram for a method of controlling a remote controller configured to control a display apparatus according to one embodiment of the present invention;

FIG. 5 is an internal block diagram of a remote controller configured to control a display apparatus according to one embodiment of the present invention;

FIG. 6 is a diagram of a total system configured to implement a virtual channel browsing function according to one embodiment of the present invention;

FIG. 7 is a diagram of a data structure usable in the course of performing a virtual channel browsing function according to one embodiment of the present invention;

FIG. 8 is a flowchart for one example of a process for performing a virtual channel browsing function according to one embodiment of the present invention;

FIG. 9 is a flowchart for another example of a process for performing a virtual channel browsing function according to one embodiment of the present invention;

FIG. 10 is a diagram of a user interface for selecting a 1^{st} mode of a virtual channel browsing function according to one embodiment of the present invention;

FIG. 11 is a diagram of a user interface for selecting a 2^{nd} mode of a virtual channel browsing function according to one embodiment of the present invention;

FIG. 12 is a diagram of a 1^{st} screen of activating a virtual channel browsing function in accordance with a mode selected in FIG. 10 or FIG. 11;

FIG. 13 is a diagram of a 2^{nd} screen of activating a virtual channel browsing function in accordance with a mode selected in FIG. 10 or FIG. 11;

FIG. 14 is a diagram of a virtual channel browsing screen according to another embodiment of the present invention;

FIG. 15 is a diagram of a virtual channel browsing screen according to a further embodiment of the present invention;

FIG. 16 is a diagram of a virtual channel browsing OSD changing based on a time flow according to one embodiment of the present invention;

FIG. 17 is a diagram of a virtual channel browsing OSD changing based on a screen change according to one embodiment of the present invention;

FIG. 18 is a diagram of a database for defining reference values to design the OSD shown in FIG. 17;

FIG. 19 is a diagram of an OSD for displaying an event information changed channel identifiably in accordance with an extent of time elapse according to one embodiment of the present invention;

FIG. 20 is a diagram of a database for defining reference values to design the OSD shown in FIG. 19;

FIG. 21 is a diagram of an OSD for displaying additional information added to an event information changed channel according to one embodiment of the present invention;

FIG. 22 is a diagram of an OSD for displaying an event information changed channel by adjusting a position of the channel according to one embodiment of the present invention;

FIG. 23 is a diagram of an OSD for identifiably displaying a group of event information changed channels and a group of event information unchanged channels according to one embodiment of the present invention;

FIG. 24 is a diagram of a total system for reinforcing a search function on a virtual channel browsing screen according to one embodiment of the present invention;

FIG. 25 is a diagram for one example of a data structure usable in the course of performing a virtual channel browsing function according to one embodiment of the present invention;

FIG. 26 is a diagram for another example of a data structure usable in the course of performing a virtual channel browsing function according to one embodiment of the present invention;

FIG. 27 is a detailed flowchart of a process for performing a virtual channel browsing function according to one embodiment of the present invention;

FIG. 28 is a diagram of a main screen of an activated virtual channel browsing function according to one embodiment of the present invention;

FIG. 29 is a diagram of a 1^{st} OSD in case of selecting a keyword related option from the main screen shown in FIG. 28;

FIG. 30 is a diagram of a 2^{nd} OSD in case of selecting a keyword related option from the main screen shown in FIG. 28;

FIG. 31 is a diagram of a 3^{rd} OSD in case of selecting a keyword related option from the main screen shown in FIG. 28;

FIG. 32 is a diagram of a 4^{th} OSD in case of selecting a keyword related option from the main screen shown in FIG. 28;

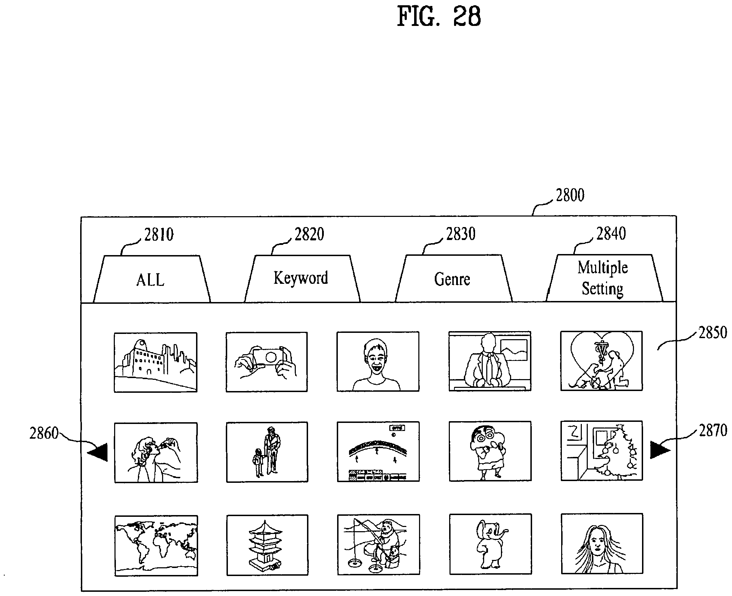

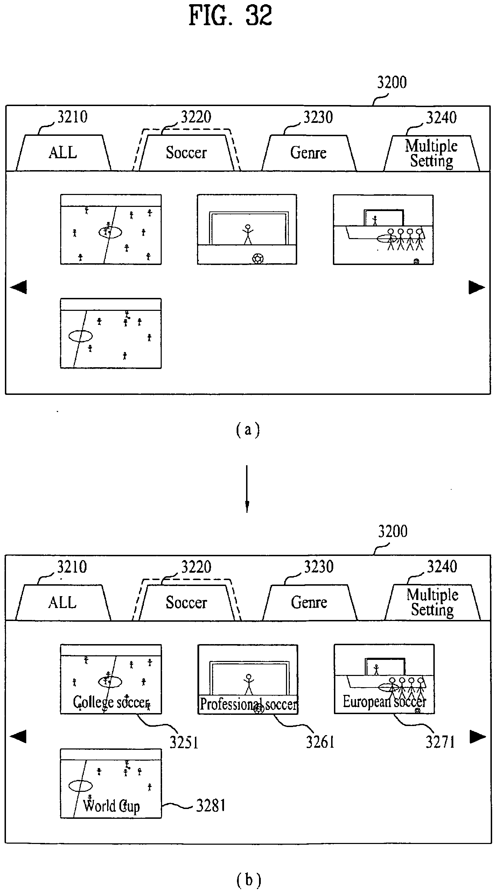

FIG. 32 is a diagram of a 4^{th} OSD in case of selecting a keyword related option from the main screen shown in FIG. 28;

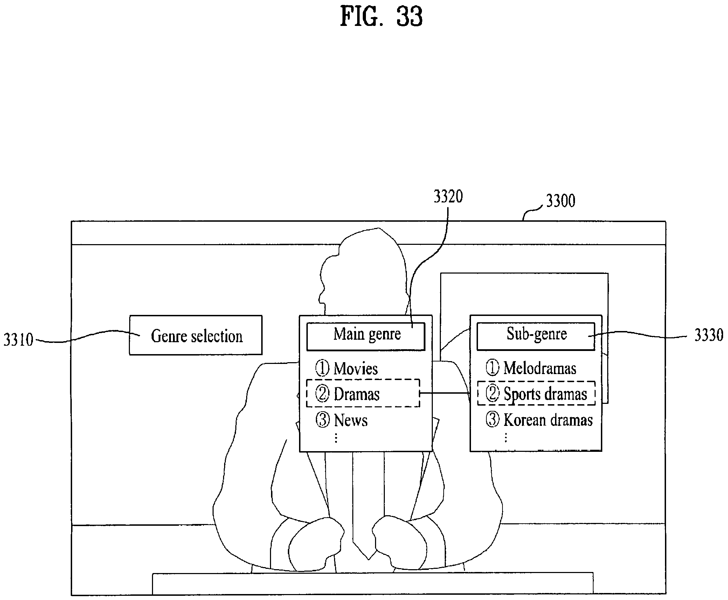

FIG. 33 is a diagram of a 1^{st} OSD in case of selecting a genre related option from the main screen shown in FIG. 28;

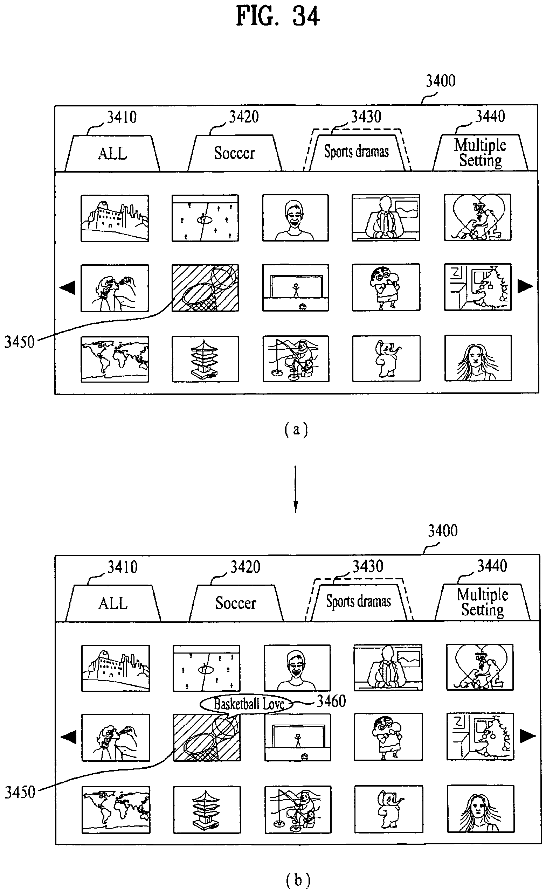

FIG. 34 is a diagram of a 2^{nd} OSD in case of selecting a genre related option from the main screen shown in FIG. 28;

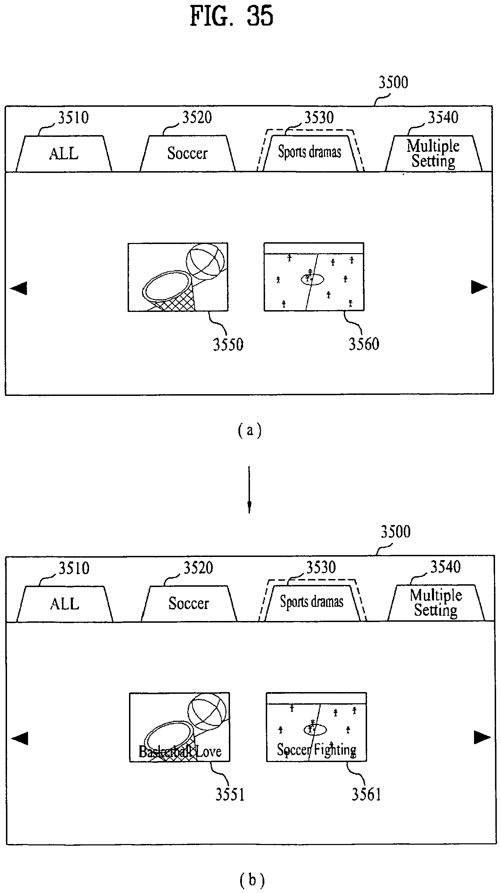

FIG. 35 is a diagram of a 3^{rd} OSD in case of selecting a genre related option from the main screen shown in FIG. 28;

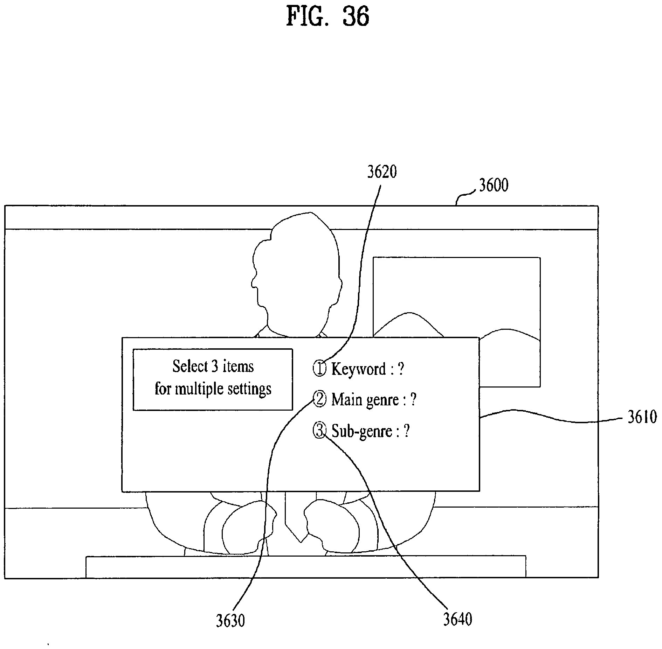

FIG. 36 is a diagram of a 1^{st} OSD in case of selecting a multiple-setting related option from the main screen shown in FIG. 28;

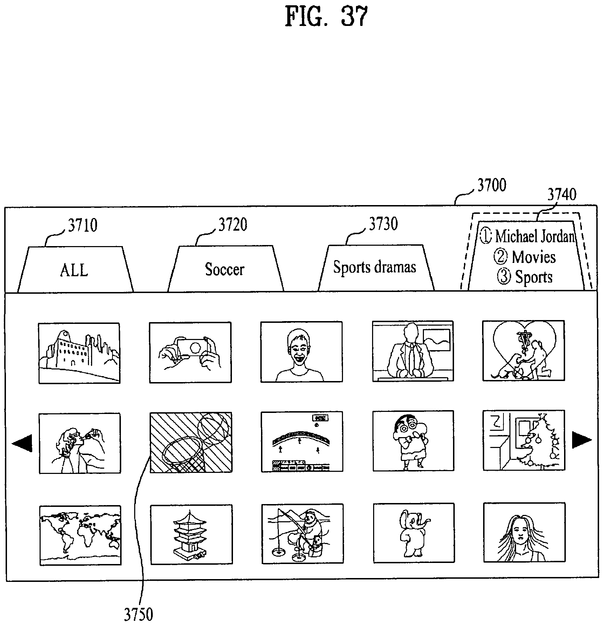

FIG. 37 is a diagram of a 2^{nd} OSD in case of selecting a multiple-setting related option from the main screen shown in FIG. 28;

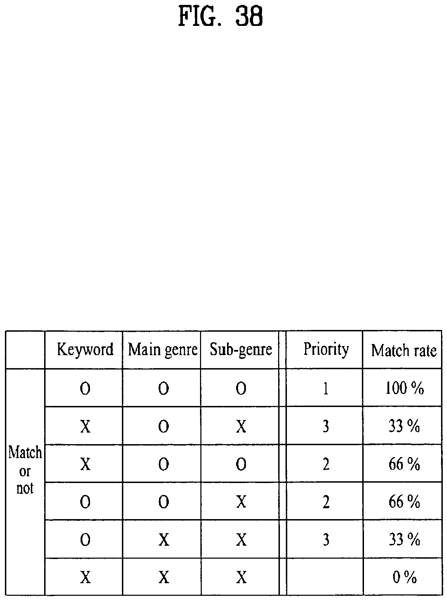

FIG. 38 is a diagram of a detailed embodiment of a database necessary to activate a multiple-setting related option;

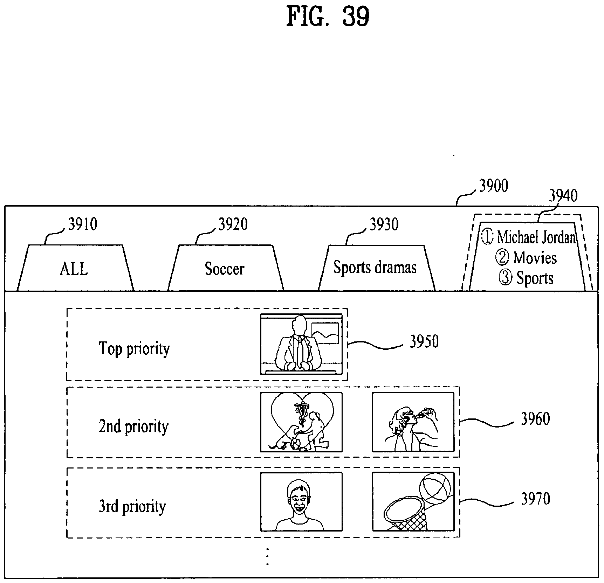

FIG. 39 is a diagram of a 3^{rd} OSD in case of selecting a multiple-setting related option from the main screen shown in FIG. 28; and

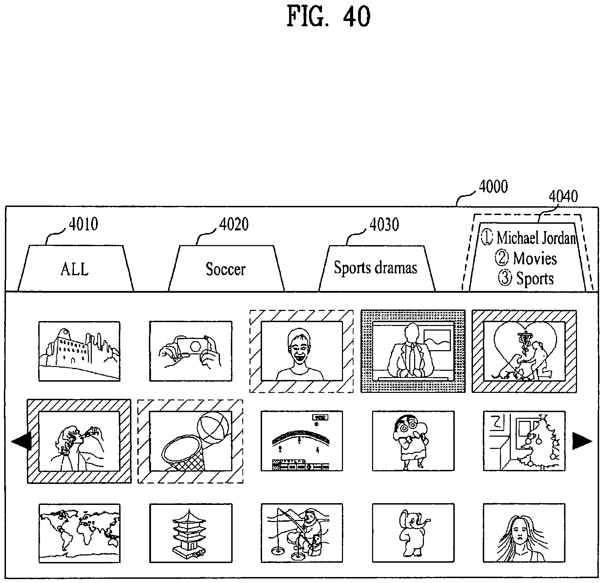

FIG. 40 is a diagram of a 4^{th} OSD in case of selecting a multiple-setting related option from the main screen shown in FIG. 28.

### DETAILED DESCRIPTION OF THE INVENTION

This invention is described in detail with reference to the accompanying drawings as follows.

In the following description, suffixes 'module', and 'part' for elements are given to facilitate the preparation of this disclosure only. So, significant meanings or roles are not given to the suffixes themselves. Hence, it is understood that the 'module' and 'part' may be interchangeably used.

Meanwhile, for example, a display apparatus described in the present specification includes an intelligent network TV having a computer support function in addition to a broadcast receiving function. Since an internet function and the like are added to the display apparatus mainly based on the broadcast receiving function, the display apparatus may be equipped with such a convenient interface in use as a manual input device, a touchscreen, a space remote controller and the like. The display apparatus may access internet and computer owing to the support of a wire/wireless internet function to perform such a function as a web browsing function, a banking function, a game function and the like. For these various functions, a standardized universal operating system (OS) may be usable.

Therefore, a network TV mentioned in the present invention may be able to add/delete various applications to/from a universal OS kernel for example, thereby performing various kinds of user-friendly functions. Moreover, for clarity and convenience in the following description of this specification, although a display apparatus, a network TV and the like may be usable together with each other, it will be apparent to those skilled in the art that the present invention covers the modifications and variations of this invention provided they come within the scope of the appended claims and their equivalents.

Furthermore, although embodiments of this invention are described in detail with reference to the accompanying drawings and contents contained therein, this invention may be non-limited by the described embodiments.

Terminologies used in the present specification may be selected from general terminologies used currently and widely in consideration of functions in this invention. Yet, the selected terminologies may be changeable in accordance with intentions of those skilled in the art, the custom of the corresponding field, the advent of new technology and the like. Occasionally, some terminologies may bee arbitrarily selected by the applicant(s) and their meanings may be noted at the corresponding description in the present specification. Therefore, the terminology used in the present specification should be construed based on the substantial meaning of the terminology and the overall contents in the present specification instead of being construed as its simple name.

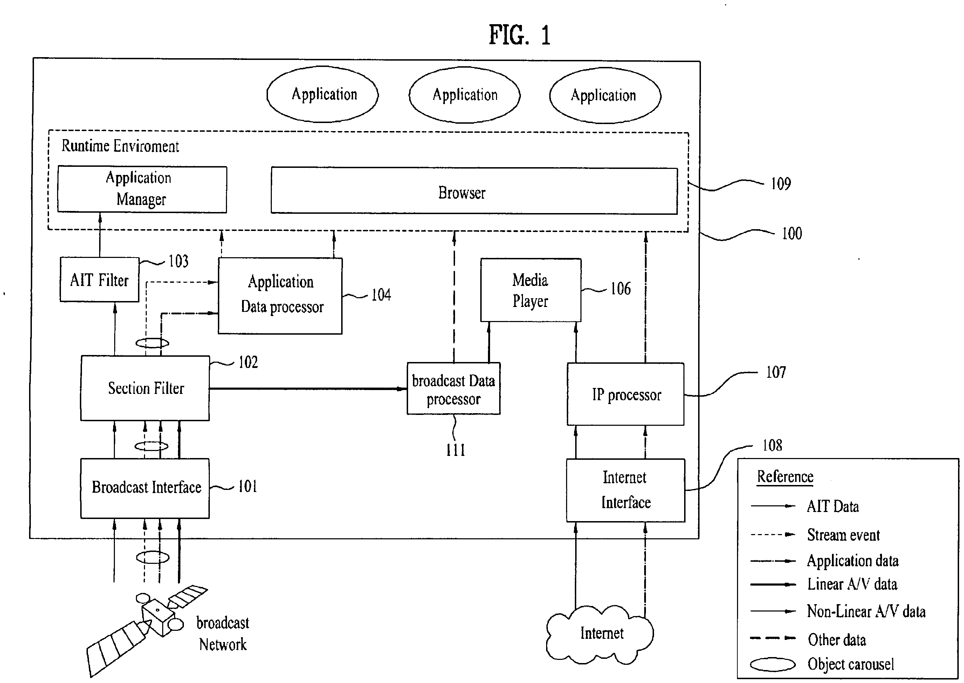

FIG. 1 is a block diagram of components of a display apparatus according to one embodiment of the present invention. In the following description, components of a display apparatus according to one embodiment of the present invention are explained with reference to FIG. 1.

Referring to FIG. 1, a display apparatus 100 according to one embodiment of the present invention is connected with a broadcast network and an internet network. In particular, the display apparatus 100 may correspond to one of a network TV, a smart TV, an HBBTV, a web TV, an IPTV and the like for example.

And, the display apparatus 100 may include a broadcast interface 101, a section filter 102, an AIT filter 103, an application data processing unit 104, a broadcast data processing unit 111, a media player 106, an internet protocol processing unit 107, an internet interface 108 and a runtime module 109 for example.

Through the broadcast interface 101, AIT (application information table) data, real-time broadcast content, application data and stream event are received. In particular, the real-time broadcast content may be named linear A/V content.

The section filter 102 performs section filtering on the 4 kinds of the data received via the broadcast interface 101. Subsequently, the section filter 102 transmits the AIT data to the AIT filter 103, transmits the linear A/V content to the broadcast data processing unit 111, and transmits the stream event and the application data to the application data processing unit 104.

Meanwhile, through the internet interface 108, non-linear A/V content and application data may be received. In particular, the non-linear A/V content may include COD (content on demand) application for example.

The non-linear A/V content is transmitted to the media player 106, while the application data is transmitted to the runtime module 109.

In particular, the runtime module 109 may include an application manager and a browser, as shown in FIG. 1, for example. The application manager may control a life cycle for an interactive application using AIT data for example. And, the browser may perform a function of displaying and processing the interactive application for example.

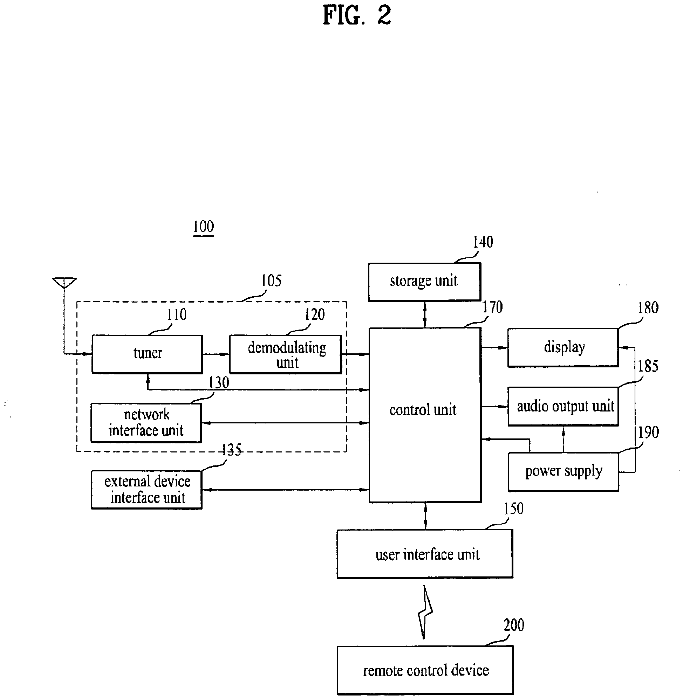

FIG. 2 is a block diagram of components of a display apparatus according to another embodiment of the present invention. In the following description, components of a display apparatus according to another embodiment of the present invention are explained with reference to FIG. 2.

Referring to FIG. 2, a display apparatus 100 according to another embodiment of the present invention may include a broadcast receiving unit 105, an external device interface unit 135, a storage unit 140, a user input interface unit 150, a control unit 170, a display unit 180, an audio output unit 185, a power supply unit 190 and a photographing unit (not shown in the drawing). In particular, the broadcast receiving unit 105 may include a tuner 110, a demodulating unit 120 and a network interface unit 130.

The tuner 110 may select an RF broadcast signal corresponding to a channel selected by a user or RG broadcast signals corresponding to all previously saved channels from RF (radio frequency) signals received via an antenna. And, the tuner 110 may convert the selected RF broadcast signal to an intermediate frequency signal, a baseband video signal or a baseband audio signal.

For instance, if the selected RF broadcast signal is a digital broadcast signal, it may be converted to a digital IF (DIF) signal. If the selected RF broadcast signal is an analog broadcast signal, it may be converted to an analog baseband video or audio signal (CVBS/SIF). In particular, the tuner 110 may be able to process both of the digital broadcast signal and the analog broadcast signal. The analog baseband video or audio signal (CVBS/SIF) outputted from the tuner 110 may be directly inputted to the control unit 170.

The tuner 110 may be able to receive an RF broadcast signal of a single carrier by ATSC (advanced television system committee) or RF broadcast signal of multi-carrier by DVB (digital video broadcasting).

Meanwhile, the tuner 110 sequentially selects RF broadcast signals of all broadcast channels, which are saved by a channel memory function, from RF broadcast signals received via an antenna and may then convert the selected RF broadcast signal to an intermediate frequency signal or a baseband video or audio signal.

The demodulating unit 120 receives the digital IF signal (DIF) converted by the tuner 110 and may then perform a demodulation operation on the received signal (DIF).

For instance, if the digital IF signal outputted from the tuner 110 follows ATSC, the demodulating unit 120 may perform 8-VSB (8-vestigal side band) demodulation for example. Moreover, the demodulating unit 120 may perform channel decoding as well. To this end, the demodulating unit 120 may include a trellis decoder, a de-interleaver, a Reed-Solomon decoder and the like and may be able to perform trellis decoding, de-interleaving and Reed-Solomon decoding.

For instance, if the digital IF signal outputted from the tuner 110 follows DVB, the demodulating unit 120 may perform COFDMA (coded orthogonal frequency division modulation) for example. And, the demodulating unit 120 may perform channel decoding. To this end, the demodulating unit 120 may include a convolution decoder, a de-interleaver, a Reed-Solomon decoder and the like and may perform convolution decoding, de-interleaving and Reed-Solomon decoding.

The demodulating unit 120 performs demodulation and channel decoding and may then output a stream signal (TS). In doing so, the stream signal may include a signal multiplexed with a video signal, an audio signal or a data signal. For instance, the stream signal may include MPEG-2 TS (transport stream) in which MPEG-2 video signal, Dolby AC-3 audio signal and the like are multiplexed with each other. In particular, the MPEG-2 TS may include a 4-byte header and 184-bute payload.

Meanwhile, the above-described demodulating unit 120 may be separately provided in accordance with ATSC or DVB. In particular, the demodulating unit 120 may include an ATSC demodulating unit and a DVB modulating unit.

The stream signal outputted from the demodulating unit 120 may be inputted to the control unit 170. The control unit 170 performs demultiplexing, video/audio signal processing and the like. The control unit 170 then outputs video and audio to the display unit 180 and the audio output unit 185, respectively.

The external device interface unit 135 may connect an external device and the display apparatus 100 with each other. To this end, the external device interface unit 135 may include an A/V input/output unit (not shown in the drawing) or a wireless communication unit (not shown in the drawing).

The external device interface unit 135 may be connected by wire/wireless with such an external device as a DVD (digital versatile disk) player, a Blu-ray player, a game player, a camera, a camcorder, a computer (e.g., laptop, etc.) and the like. The external device interface unit 135 delivers a video, audio or data signal, which is externally inputted via the connected external device, to the control unit 170 of the display apparatus 100. And, the external device interface unit 135 may be able to output a video, audio or data signal processed by the control unit 170 to the connected external device. To this end, the external device interface unit 135 may include an A/V input/output unit (not shown in the drawing) or a wireless communication unit (not shown in the drawing).

In order to enable video and audio signals of an external device to a network TV 100, the A/V input/output unit may include USB terminal, CVBS (composite video banking sync) terminal, component terminal, S-video terminal (analog), DVI (digital visual interface) terminal, HDMI (high definition multimedia interface) terminal, RGB terminal, D-SUB terminal and the like.

The wireless communication unit may be able to perform short range wireless communications with other electronic devices. The display apparatus 100 may be connected with other electronic devices via network by such a communication standard as Bluetooth, RFID (radio frequency identification), IrDA (infrared data association), UWB (ultra wideband), ZigBee, DLNA (digital living network alliance) and the like.

The external device interface unit 135 is connected to at least one of various set-top boxes via at least one of the above-described terminals and may be able to enable input/output operations with the connected at least one set-top box.

Meanwhile, the external device interface unit 135 receives an application or an application list from a neighboring external device and may then forward the received application or the received application list to the control unit 170 or the storage unit 140.

The network interface unit 130 provides an interface configured to connect the display apparatus 100 with a wire/wireless network including an internet network. The network interface unit 130 may include Ethernet terminal or the like for an access to the wire network for example. For an access to the wireless network, the network interface unit 130 may use such a communication standard as WLAN (wireless LAN) (Wi-Fi), WiBro (wireless broadband), WiMax (world interoperability for microwave access), HSPDA (high speed downlink packet access) and the like for example.

The network interface unit 130 may transmit/receive data to/from another user or another electronic device via the accessed network or another network linked with the accessed network. In particular, the network interface unit 130 may be able to transmit some of contents data saved in the display device 100 to a selected one of other users or electronic devices registered to the display apparatus 100 in advance.

Meanwhile, the network interface unit 130 may access a prescribed webpage via the accessed network or another network linked with the accessed network. In particular, the network interface unit 130 accesses a prescribed webpage via network and may then transmit/receive data to/from a corresponding server. Besides, the network interface unit 130 may be able to receive contents or data provided by a content provider or a network operator. In particular, the network interface unit 130 may receive contents (e.g., movies, advertisements, games, VOD, broadcast signals, etc.) and related informations provided by the content provider or the network operator. The network interface unit 130 may receive update information and file of firmware provided by the network operator. And, the network interface unit 130 may transmit data to the internet or content provider or the network operator.

Moreover, the network interface unit 130 may select and receive a specific one of applications opened to the public via network.

The storage unit 140 may store programs for the signal processings and controls within the control unit 170 or may store signal-processed video, audio and/or data signals.

The storage unit 140 may perform a function for temporary storage of video, audio or data signals inputted from the external device interface unit 135 or the network interface unit 130. And, the storage unit 140 may store information on a prescribed broadcast channel using a channel memory function.

The storage unit 140 may store applications or an application list inputted from the external device interface unit 135 or the network interface unit 130.

The storage unit 140 may store various platforms explained in the following description later.

And, the storage unit 140 may include at least one storage medium selected from a flash memory type storage medium, a hard disk type storage medium, a multimedia card micro type storage medium, a card type memory (e.g., SD memory, XD memory, etc.), RAM, ROM (e.g., EEPROM) and the like. The network TV 100 plays back a content file (e.g., a video file, a still picture file, a music file, a document file, an application file, etc.) saved in the storage unit 140 and may then provide the played content file to a user.

FIG. 2 shows that the storage unit 140 is configured separate from the control unit 170, by which the present invention may be non-limited. Alternatively, the storage unit 140 may be configured within the control unit 170.

The user input interface unit 150 forwards a signal inputted by a user to the control unit 170 or may forward a signal from the control unit 170 to a user.

For instance, by one of various communication methods including RF (radio frequency) communication method, IR (infrared) communication method and the like, the user input interface unit 150 receives a control signal for power-on/off, channel selection, screen settings or the like from the remote controller 200 and the processes the received control signal. Alternatively, the user input interface unit 150 may control a control signal from the control unit 170 to be transmitted to the remote controller 200.

The user input interface unit 150 may forward a control signal, which is inputted from such a local key (not shown in the drawing) as a power key, a channel key, a volume key, a setting key and the like, to the control unit 170 for example.

The user input interface unit 150 may forward a control signal, which is inputted from a sensing unit (not shown in the drawing) configured to sense a user gesture, to the control unit 170 or may transmit a signal from the control unit 170 to the sensing unit (not shown in the drawing). In particular, the sensing unit (not shown in the drawing) may include at least one of a touch sensor, a voice sensor, a position sensor, a motion sensor and the like.

The control unit 170 may be able to generate and output a signal for a video or audio output in a manner of demultiplexing the stream inputted via one of the tuner 110, the demodulating unit 120 and the external device interface unit 135 or processing demultiplexed signals.

The video signal video-processed by the control unit 170 is inputted to the display unit 180 and may be then displayed as a video corresponding to the corresponding video signal. And, the video signal video-processed by the control unit 170 may be inputted to an external output device via the external device interface unit 135.

The audio signal processed by the control unit 170 may be outputted to the audio output unit 185. And, the audio signal processed by the control unit 170 may be inputted to an external output device via the external device interface unit 135.

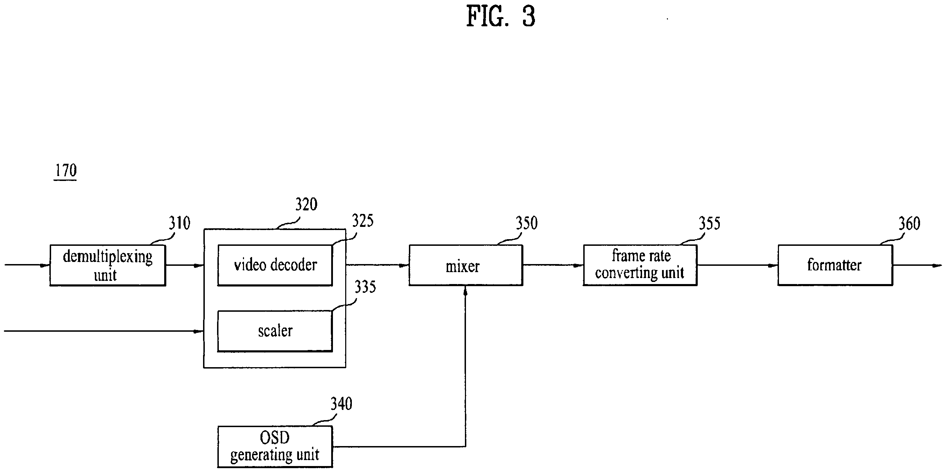

The control unit 170 may include a demultiplexing unit, a video processing unit and the like (not shown in FIG. 2), which will be described with reference to FIG. 3 later.

The control unit 170 may be able to control overall operations within the network TV 100. For instance, the control unit 170 may control the tuner 110 to be tuned to an RF broadcast corresponding to a user-selected channel or a previously saved channel.

The control unit 170 may control the network TV 100 by a user command inputted via the user input interface unit 150 or an internal program. In particular, after a network has been accessed, the control unit 170 may control a user-desired application or a user-desired application list to be downloaded into the network TV 100.

For instance, the control unit 170 may control the tuner 110 to receive an input of a signal on a channel selected by a prescribed channel selection command received via the user input interface unit 150. The control unit 170 may then process video, audio or data signals on the selected channel. And, the control unit 170 may control user-selected channel information and the like to be outputted via the display unit 180 or the audio output unit 185 together with the processed video or audio signal.

For another instance, in accordance with an external device video play command received via the user input interface unit 150, the control unit 170 may control a video or audio signal, which is inputted from an external device such as a camera, a camcorder and the like via the external device interface unit 135, to be outputted via the display unit 180 or the audio output unit 185.

The control unit 170 may control the display unit 180 to display an image. For instance, a broadcast image inputted via the tuner 110, an external input image inputted via the external device interface unit 135, an image inputted via the network interface unit or an image saved in the storage unit 140 may be controlled to be displayed on the display unit 180 by the control unit 170. In doing so, the image displayed on the display unit 180 may include one of a still image, a moving image, a 2D image, a 3D image and the like.

The control unit 170 may control a content to be played back. In this case, the content may include one of a content saved in the display apparatus 100, a received broadcast content and an external input content inputted externally. And, the content may include at least one of a broadcast video, an internal input video, an audio file, a still image, an accessed web screen and a document file.

According to an embodiment of the present invention, the control unit 170 may control a home screen to be displayed on the display unit 180 in accordance with an input of 'go to home screen'.

In this case, the home screen may include a plurality of card objects sorted by content source. The card objects may include at least one of a card object indicating a thumbnail list of broadcast channels, a card object indicating a broadcast guide list, a card object indicating a broadcast reservation list or a broadcast recording list and a card object indicating a media list within the network TV or a device connected to the network TV. And, the card objects may further include at least one of a card object indicating a connected external device list and a card object indicating a list related to calls.

The home screen may further include an application menu having at least one executable application item.

Meanwhile, if there is a card object shift input, the control unit 170 shifts and displays a corresponding card object or controls a card object, which is not displayed on the displayed unit, to be shifted and displayed on the display unit 180.

If a prescribed card object is selected from a plurality of the card objects within the home screen, the control unit 170 may control an image corresponding to the selected card object to be displayed on the display unit 180.

Moreover, the control unit 170 may control a received broadcast image and an object indicating the corresponding broadcast image related information to be displayed within a card object representing the corresponding broadcast image. In particular, the control unit 170 may control a size of the broadcast image to be fixed by a lock setting.

The control unit 170 may control a setup object, which is provided for at least one of a video setup within the network TV, an audio setup, a screen setup, a reservation setup, a remote controller pointer setup and a network setup, to be displayed within the home screen.

The control unit 170 may control an object, which is provided for a login item, a help item or an exit item, to be displayed on a prescribed region of the home screen. And, the control unit 170 may control an object, which indicates the number of all card objects or the number of card objects displayed on the display unit 180 among all card objects, to be displayed on a prescribed region of the home screen.

Moreover, if a card object name within a prescribed card object among the card objects displayed on the display unit 180 is selected, the control unit 170 may control the corresponding card object to be displayed as a full screen on the display unit 180. If an incoming call is received within an accessed external device or the network TV, the control unit 170 may control a call related card object among a plurality of card objects to be displayed in a manner of being focused or may control a call related card object to be displayed in a manner of being shifted into the display unit 180.

Meanwhile, if an application view item is entered, the control unit 170 may control an application or an application list within the network TV 100 to be displayed or may control an application or application list downloadable from an external network to be displayed. The control unit 170 may control the application, which is downloaded from the external network, to be installed and driven together with various used interfaces. And, the control unit 170 may control an image related to an activated application to be displayed on the display unit 180 by a user selection.

The display unit 180 generates a drive signal in a manner of converting video, data and OSD signals processed by the control unit 170 or video and data signals received from the external device interface unit 135 to R, G and B signals.

The display unit 180 may include one of PDP, LCD, OLED, flexible display, 3D display and the like.

Meanwhile, the display unit 180 may include a touchscreen to play a role as an input device as well as an output device.

The audio output unit 185 receives an input of such a signal audio-processed by the control unit 170 as a stereo signal, a 3.1 channel signal, a 5.1 channel signal and the like and then outputs the received signal as audio. And, the audio output unit 185 may be implemented with a speaker of one of various types.

As mentioned in the foregoing description, in order to sense a user's gesture, the display apparatus 100 may further include the sensing unit (not shown in the drawing) having at least one of a touch sensor, a voice sensor, a position sensor, a motion sensor and the like. A signal sensed by the sensing unit (not shown in the drawing) may be forwarded to the control unit 170 via the user input interface unit 150.

Meanwhile, the display apparatus 100 may further include a photographing unit (not shown in the drawing) configured to photograph a user. And, image information photographed by the photographing unit (not shown in the drawing) may be inputted to the control unit 170.

The control unit 170 may be able to sense a user's gesture in a manner of using an image photographed by the photographing unit (not shown in the drawing) or a signal sensed by the sensing unit (not shown in the drawing) separately or combining them together.

The power supply unit 190 may supply a corresponding power to the network TV 100 overall.

In particular, the power supply unit 190 may be able to supply the power to the control unit 170 implemented into SOC (system on chip), the display unit 180 for an image display and the audio output unit 185 for an audio output.

To this end, the power supply unit 190 may include a converter (not shown in the drawing) configured to convert AC power to DC power. Meanwhile, in case that the display unit 180 is implemented into an LCD (liquid crystal display) panel having a plurality of backlight lamps for example, the power supply unit 190 may further include an inverter (not shown in the drawing) configured to enable PWM operation for luminance variation or dimming.

The remote controller 200 transmits a user input to the user input interface unit 150. To this end, the remote controller 200 may use one of Bluetooth, RF (radio frequency) communication, IR (infrared) communication, UWB (ultra wideband), ZigBee and the like.

The remote controller 200 receives a video, audio or data signal outputted from the user input interface unit 150. The remote controller 200 then displays the received signal on itself or outputs audio or vibration.

The above-described display apparatus 100 may include a digital broadcast receiver capable of receiving at least one of stationary ATSC (8-VSB) digital broadcast, DVB-T (COFDM) digital broadcast, ISDB-T (BST-OFDM) digital broadcast and the like.

Meanwhile, the block diagram of the display apparatus 100 shown in FIG. 1 or FIG. 2 is provided for one embodiment of the present invention. The components shown in the block diagram may be integrated, added or omitted in accordance with options of an actually implemented device such as a TV and the like. In particular, at least two of the components may be integrated into one component or one component may be subdivided into at least two components, if necessary. Moreover, a function performed by each block is provided for the description of an embodiment of the present invention, of which detailed operation or device may non-limit the scope of the appended claims and their equivalents.

FIG. 3 is an internal block diagram of a control unit shown in FIG. 2. In the following description, functions of the control unit are explained in detail with reference to FIG. 2 and FIG. 3.

Referring to FIG. 2 and FIG. 3, the control unit 170 according to one embodiment of the present invention may include a demultiplexing unit 310, a video processing unit 320, an OSD generating unit 340, a mixer 350, a frame rate converting unit 355 and a formatter 360. And, the control unit 170 may further include an audio processing unit (not shown in the drawing) and a data processing unit (not shown in the drawing).

The demultiplexing unit 310 demultiplexes an inputted stream. For instance, if MPEG-2 TS is inputted, the demultiplexing unit 310 demultiplexes the inputted MPEG-2 TS to separate into a video signal, an audio signal and a data signal. In doing so, the stream signal inputted to the demultiplexing unit 310 may include a stream signal outputted from the tuner 110, the demodulating unit 120 or the external device interface unit 135 for example.

The video processing unit 320 may be able to perform video processing of the demultiplexed video signal. To this end, the video processing unit 320 may include a video decoder 325 and a scaler 335.

The video decoder 325 decodes the demultiplexed video signal and the scaler 335 then scales resolution of the decoded video signal to be outputtable from the display unit 180.

The video decoder 325 may include a decoder of one of various specifications. For instance, if a demultiplexed video signal is MPEG-2 encoded video signal, it may be decoded by MPEG-2 decoder.

For another instance, if a demultiplexed video signal is DMB (digital multimedia broadcasting0 video signal of a video signal encoded according to H.264 standard by DVB-H, it may be decoded by H.264 decoder.

Meanwhile, the video signal decoded by the video processing unit 320 may be inputted to the mixer 350.

The OSD generating unit 340 generates OSD signal by itself or in accordance with a user input. For instance, based on a control signal from the user input interface unit 150, the OSD generating unit 340 may be able to generate a signal for displaying various information as a graphic or text on a screen of the display unit 180. In doing so, the generated OSD signal may include one of various data including a user interface screen, one of various menu screens, a widget, an icon and the like of the display apparatus 100.

For instance, the OSD generating unit 340 may be able to generate a signal for displaying broadcast information based on a caption or EPG of a broadcast image.

The mixer 350 may be able to mix the OSD signal generated from the OSD generating unit 340 and the decoded video signal video-processed by the video processing unit 220 together. The mixed signal is then provided to the formatter 360. As the OSD signal is mixed with the decoded broadcast video signal or the external input signal, OSD may be displayed in a manner of being overlaid over a broadcast video or an external input video.

The frame rate converting unit (or frame rate converter: FRC) 355 may be able to convert a frame rate of an inputted video. For instance, the frame rate converting unit 355 converts 60 Hz of a frame rate to 120 Hz or 240 Hz. In case of converting 60Hz of a frame rate to 120 Hz, a same 1^{st} frame may be inserted between the 1^{st} frame and a 2^{nd} frame or a 3^{rd} frame predicted from the 1^{st} and 2^{nd} frames may be inserted between the 1^{st} frame and the 2^{nd} frame. In case of converting 60 Hz of a frame rate to 240 Hz, 3 same frames are further inserted or 3 predicted frames may be inserted. Besides, it may be able to maintain an inputted frame rate without separate conversion.

The formatter 360 receives an input of an output signal of the frame rate converting unit 355, changes a format of the signal to be suitable for the display unit 180, and then outputs a formatted signal. For instance, the formatter 360 may output R/G/B data signal. In particular, this R/G/B data signal may be outputted as a low voltage differential signaling (LVDS) or mini-LVDS.

Meanwhile, the audio processing unit (not shown in the drawing) within the control unit 170 may perform audio processing on the demultiplexed audio signal. To this end, the audio processing unit (not shown in the drawing) may include various decoders.

If the demultiplexed audio signal is an encoded audio signal, the audio processing unit (not shown in the drawing) within the control unit 170 may be able to decode the encoded audio signal. For instance, the demultiplexed audio signal may be decoded by one of MPEG-2 decoder, MPEG-4 decoder, AAC decoder and AC-3 decoder.

The audio processing unit (not shown in the drawing) within the control unit 170 may process base, treble, volume adjustment and the like.

The data processing unit (not shown in the drawing) within the control unit 170 may perform data processing on the demultiplexed data signal. For instance, incase that the demultiplexed data signal is an encoded data signal, the data processing unit (not shown in the drawing) may be able to decode the encoded data signal. In this case, the encoded data signal may include EPG (electronic program guide) information that contains such broadcast information as start and end times of a broadcast program broadcasted on each channel and the like. For instance, in case of ATSC system, the EPG information may include ATSC-PSIP (ATSC-program and system information protocol) information. For another instance, in case of DVB system, the EPG information may include DVB-SI (DVB-service information) information.

In particular, the ATSC-PSIP information or the DVB-SI information may include the information contained in the above-mentioned stream, i.e., a header (4 bytes) of the MPEG-2 TS.

Optionally, since the block diagram of the control unit 170 shown in FIG. 3 is provided for one embodiment of the present invention, at least one necessary module may be added or omitted if necessary.

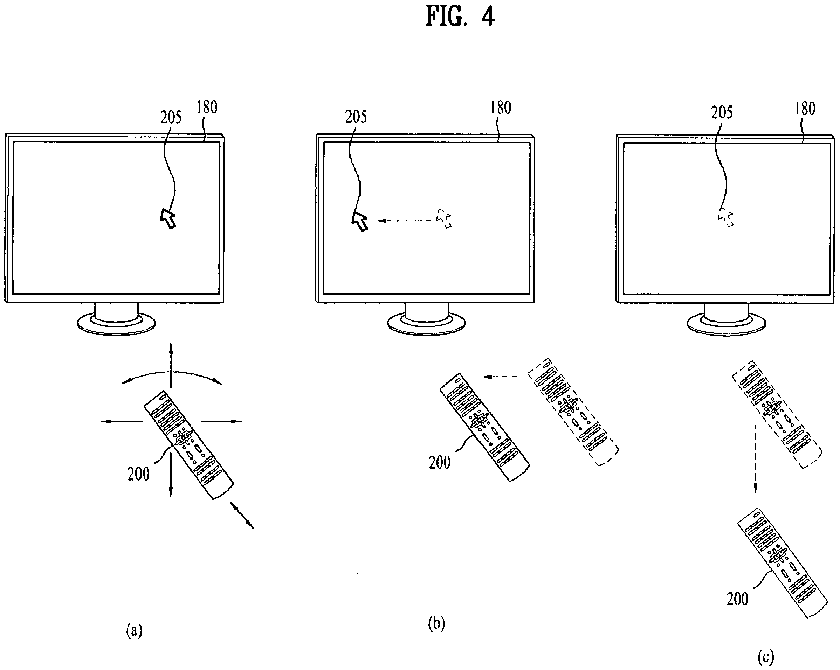

FIG. 4 is a diagram for a method of controlling a remote controller configured to control a display apparatus according to one embodiment of the present invention. In the following description, an exterior of a remote controller for controlling a display apparatus according to one embodiment of the present invention is schematically explained with reference to FIG. 4.

Referring to FIG. 4 (a), a pointer 205 corresponding to a remote controller 200 is displayed on a display unit 180.

A user may move or rotate the remote controller 200 up & down, right & left [FIG. 4 (b)], or back & forth [FIG. 4 (c)]. The pointer 205 displayed on the display unit 180 of the display apparatus may correspond to a motion of the remote controller 200. Since this remote controller 200 is displayed in a manner that the corresponding pointer 205 moves in accordance with a motion in 3D space, it may be named a space remote controller.

Referring to FIG. 4 (b), if a user moves the remote controller 200 to left, the pointer 205 displayed on the display unit 180 of the display apparatus moves to left as well to correspond to the moved remote controller 200.

Information on a motion of the remote controller 200 detected by a sensor of the remote controller 200 may be transmitted to the display apparatus. The display apparatus may be then able to calculate coordinates of the pointer 205 from the information on the motion of the remote controller 200. Subsequently, the display apparatus may display the pointer 205 to correspond to the calculated coordinates.

Referring to FIG. 4 (c), while a specific button within the remote controller 200 is pressed, a user moves the remote controller 200 to get distant from the display unit 180. As the remote controller 200 gets distant from the display unit 180, a selected region within the display unit 180 corresponding to the pointer 205 may be displayed in a manner of being enlarged by zoom-in. On the contrary, if a user moves the remote controller 200 to get closer to the display unit 180, a selected region within the display unit 180 corresponding to the pointer 205 may be displayed in a manner of being reduced by zoom-out. Meanwhile, if the remote controller 200 gets distant from the display unit 180, a selected region may zoom out. If the remote controller 200 gets closer to the display unit 180, a selected region may zoom in.

Meanwhile, while a specific button within the remote controller 200 is pressed, recognition of vertical and horizontal motions of the remote controller 200 may be excluded. In particular, in case that the remote controller 200 is moved to get distant from or closer to the display unit 180, the back & forth motion may be recognized only while the up & down motion and the right & left motion are not recognizable. While the specific button within the remote controller 200 is not pressed, the pointer 205 may be moved only in accordance with the up & down motion or the right & left motion of the remote controller 200.

Besides, a moving speed or direction of the pointer 205 may correspond to a moving speed or direction of the remote controller 200.

Meanwhile, a pointer mentioned in this description may mean an object displayed on the display unit 180 to correspond to a motion of the remote controller 200. Hence, one of objects of various shapes may be available for a shape the pointer 205 as well as an arrow shape shown in the drawing. For instance, the pointer 205 may have a shape including one of a dot, a cursor, a prompt, a thick outline and the like. The pointer 205 may be displayed to correspond to a prescribed point on a vertical or horizontal axis on the display unit 180 or may be displayed to correspond to a plurality of points including a line, a surface or the like.

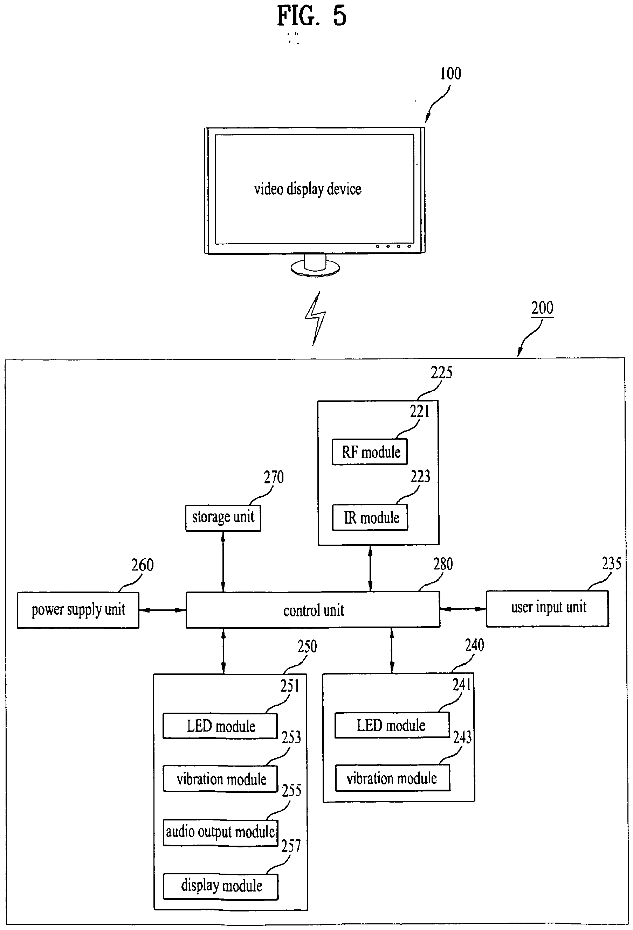

FIG. 5 is an internal block diagram of a remote controller configured to control a display apparatus according to one embodiment of the present invention. In the following description, internal modules of a remote controller configured to control a display apparatus according to one embodiment of the present invention is explained in detail with reference to FIG. 5.

Referring to FIG. 5, a remote controller 200 may include a wireless communication unit 225, a user input unit 235, a sensor unit 240, an output unit 250, a power supply unit 260, a storage unit 270 and a control unit 280.

The wireless communication unit 225 transceives signals with a random one of the display apparatuses according to the aforementioned embodiments of the present invention.

According to the present embodiment, a remote controller 200 may include an RF module 221 capable of transceiving signals with a display apparatus 100 by RF communication protocol. And, the remote controller 200 may include an IR module 223 capable of transceiving signals with the display apparatus 100 by IR communication protocol.

According to the present embodiment, the remote controller 200 may transmit a signal containing information on a motion and the like of the remote controller 200 to the display apparatus 100 via the RF module 221.

The remote controller 200 may receive a signal transmitted by the display apparatus 100 via the RF module 221. If necessary, the remote controller 200 may transmit a command for power-on/off, channel switching, volume adjustment or the like to the display apparatus 100 via the IR module 223.

The user input unit 235 may include at least one of a keypad, buttons, a touchpad, a touchscreen and the like. A user may input a command associated with the display apparatus 100 to the remote controller 200 by manipulating the user input unit 235. In case that the user input unit includes a hard key button, the user may input a command associated with the display apparatus 100 to the remote controller 200 by an action of pushing the hard key button. In case that the user input unit 235 includes the touchscreen, a user may input a command associated with the display apparatus 100 to the remote controller 200 by touching a soft key of the touchscreen. The user input unit 235 may include various kinds of input means (e.g., a scroll key, a jog key, etc.), which can be manipulated by a user. And, the scope of the appended claims and their equivalents of the present embodiment may be non-limited by the various kinds of the input means.

The sensor unit 240 may include at least one of a gyro sensor 241 and an acceleration sensor 243. In particular, the gyro sensor 241 may be able to sense information on a motion of the remote controller 200.

For instance, the gyro sensor 241 may sense the information on the motion of the remote controller 200 with reference to x-, y- and z-axes. The acceleration sensor 243 may be able to sense information on a moving speed of the remote controller 200 and the like. Meanwhile, the sensor unit 240 may further include a distance measuring sensor by which a distance from the display unit 180 may be sensed.

The output unit 250 may be able to output a video or audio signal corresponding to a manipulation of the user input unit 235 or a signal transmitted by the display apparatus 100. Via the output unit 250, a user may be able to recognize whether the user input unit 235 is manipulated or whether the display apparatus 100 is controlled.

For instance, the output unit 250 may include at least one of an LED module 251, a vibration module 253, an audio output module 255 and a display module 257. In particular, if the user input unit 235 is manipulated or a signal is transceived with the display apparatus 100 via the wireless communication unit 225, the LED module 251 is lighted, the vibration module 253 generates vibration, the audio output module 255 outputs audio, or the display module 257 displays a video or image.

The power supply unit 260 may supply power to the remote controller 200. The power supply unit 260 cuts off a power supply to save power consumption if the remote controller 200 does not make any motion for prescribed duration. If a prescribed key provided to the remote controller 200 is manipulated, the power supply unit 260 may resume the power supply.

The storage unit 270 may store various kinds of programs, application data and the like required for controls or operations of the remote controller 200. In case that the remote controller 200 transceives signals with the display apparatus 100 by wireless via the RF module 221, the remote controller 200 and the display apparatus 100 transceive signals in between on a prescribed frequency band. The control unit 280 of the remote controller 200 controls information on a frequency band, on which signals can be transceived by wireless with the display apparatus 100 pairing with the remote controller 200, to be saved in the storage unit 270 and may then refer to the saved information.

The control unit 280 controls overall items associated with the control of the remote controller 200. The controller 180 may control a signal, which corresponds to a prescribed key manipulation of the user input unit 235 or a motion of the remote controller 200 sensed by the sensor unit 240, to be transmitted to the display apparatus 100 via the wireless communication unit 225.

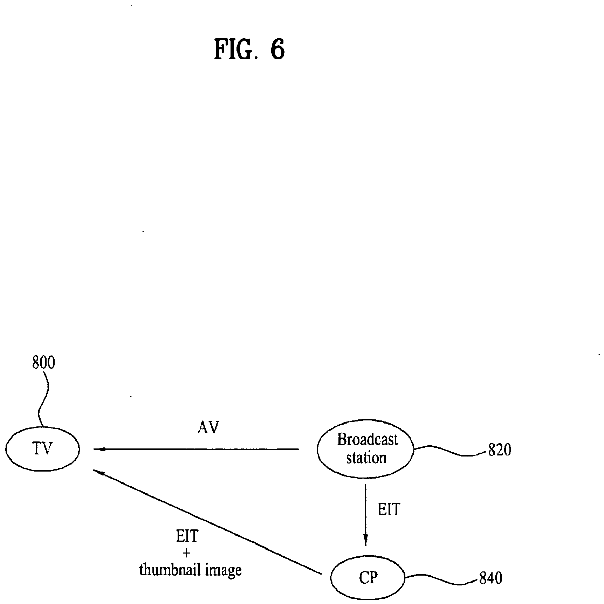

FIG. 6 is a diagram of a total system configured to implement a virtual channel browsing function according to one embodiment of the present invention. In the following description, a total system configured to implement a virtual channel browsing function according to one embodiment of the present invention is explained with reference to FIG. 6. Besides, if the system shown in FIG. 6 is implemented in a manner of being combined with at least one of the former embodiments described with reference to FIGs. 1 to 5, it may pertain to the appended claims and their equivalents of the present invention.

Referring to FIG. 6, a TV 800 according to one embodiment of the present invention includes one tuner and may receive AV data of a normal broadcast program from a broadcast station 820.

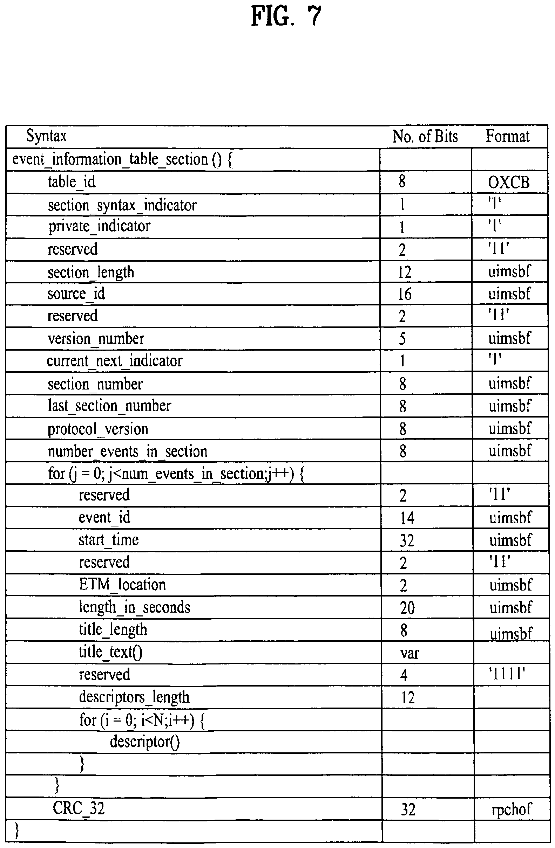

A CP 840, which processes data for a virtual channel browsing, may primarily collect information on broadcast programs from the broadcast station 820. In this case, the information on the broadcast programs may correspond to a table format of EIT type for example, which will be described in detail with reference to FIG. 7 later. And, an event mentioned in this specification may correspond to a broadcast program unit for example.

The CP 840 may depend on EIT information received from the broadcast station 820 and may secondarily add thumbnail image data corresponding to event information of each channel that is currently broadcasted. Of course, the CP 840 may use the received EIT information as it is. Alternatively, the CP 840 may define and use more compact data configured with informations (e.g., a start time of event, total running time, title information, etc.) necessary for channel browsing only.

Having received a request for activating a virtual channel browsing function from the TV 800, the CP 840 delivers the EIT information and the thumbnail image data corresponding to each event to the TV 800.

Therefore, the TV 800 according to one embodiment of the present invention may not need to perform an operation of capturing a screen by scanning all channels one by one each time the channel browsing function is activated.

According to another embodiment, the CP 840 may be designed to transmit thumbnail image data corresponding to each event and the broadcast station 820 may be designed to transmit EIT containing information on each event. In particular, the TV 800 preferentially performs data processing on two kinds of data received via different paths, respectively and then activates a channel browsing function of displaying image information on all channels currently broadcasted by processing the two kinds of the combined data.

FIG. 7 is a diagram of a data structure usable in the course of performing a virtual channel browsing function according to one embodiment of the present invention. In the following description, one example of EIT (event information table) usable in the process for performing a virtual channel browsing function according to one embodiment of the present invention is explained with reference to FIG. 7. Yet, in order to activate a virtual channel browsing function, as mentioned in the foregoing description, the EIT table format shown in FIG. 7 may be fully usable or necessary basic information may be extracted and used only.

In EIT shown in FIG. 7, a table_id field may indicate a unique table identifier (ID) assigned to identify EIT uniquely. In particular, the table_id field may indicate a value indicating that a table having a received section belong thereto is EIT.

A section_syntax_indicator field may be set to a value of 1 and may mean that a general MPEG-2 section syntax follows a section_length field. For example, '1' is assigned to a private_indicator field. The section_length field indicates a remaining field of a section after the section_length field to an end of this section by byte unit.

A source_id field indicates source_id of a virtual channel that carries events described within a section. A version_number field indicates a version value of EIT-i. The version_number field may be represented as a remaining value resulting from incrementing a modified content of EIT-I by 1 and then dividing it by 32.

A current_next_indicator field indicates that a transmitted table is always applicable and may be set to 1. A section_number field indicates a number of a corresponding section. And, a last_section_number field indicates a last section number of full EIT.

A protocol_version field is initially set to 0. If a protocol is changed, the protocol_version field is set to a value that is not 0. A num_events_in_section field indicates the number of events existing within a corresponding EIT section. If a value of the num_events_in_section field is 0, it may indicate that there is no event defined in a corresponding section.

Next to the num_events_in_section field, there exists an event loop repeated as many as the number of events included in the section. In particular, the event loop may include event_id field, start_time field, ETM_location field, title_length field and title_text() field.

And, the event loop may further include a descriptor_length field and descriptor() field, which are individually applied to each event.

The event_id field indicates an identification number capable of identifying a corresponding event within an event loop. This identification number may be used as a portion of event ETM_id.

The start_time field may indicate a start time of an event.

The ETM_location field may indicate a presence and location of an extended text message (ETM).

The length_in_seconds field may indicate a duration time of an event by second unit.

The title_length field may indicate a length of next title_text() by byte unit.

If the title_length field value is set to 0, it may mean that there is no title in a corresponding event.

The title_text() field may indicate an event title of a multiple string structure.

The descriptor_length field may indicate a total length of a next event descriptor by byte unit.

According to another embodiment of the present invention, a CP primarily generates a data structure, which is more compact than a conventional EIT, by extracting minimum information (e.g., start_time field, length_in_seconds field, title_text() field) necessary for a virtual channel browsing instead of using all heavy data shown in FIG. 7. Moreover, a thumbnail image corresponding to each event is added to the primarily generated data structure and is then transmitted to a TV. This design may pertain to the scope of the appended claims and their equivalents of the present invention.

As mentioned in the foregoing description, a TV may be able to estimate an end time of each event using data received from a CP or a broadcast station. In this case, the TV is designed to make a request for information (thumbnail image included) of a newly starting event at an end timing point of each event in order to update a screen of a virtual channel browsing. Of course, the request may be designed to be made at a timing point ahead of a the end timing point of the corresponding event by a preset time (e.g., 10 minutes before, 5 minutes before, 1 minute before, etc.). This design may be advantageous in preventing a seamed channel browsing screen effect more completely.

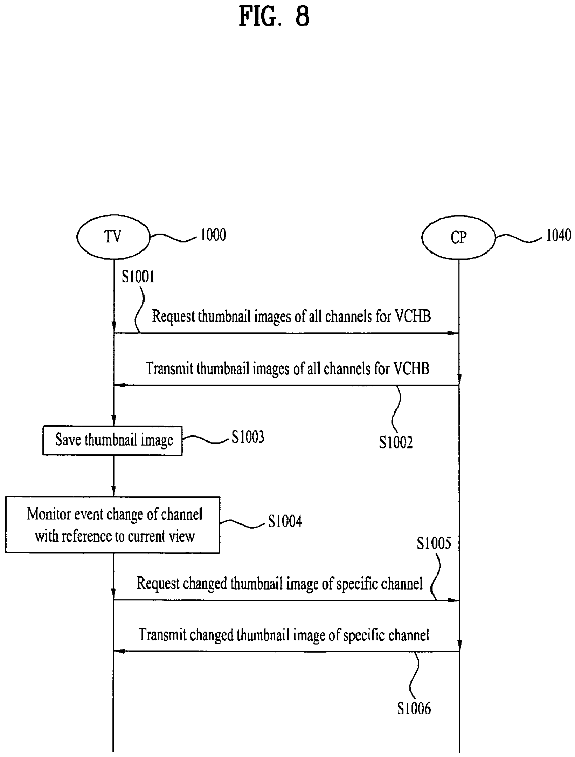

FIG. 8 is a flowchart for one example of a process for performing a virtual channel browsing function according to one embodiment of the present invention. In the following description, one example of a process for performing a virtual channel browsing function according to one embodiment of the present invention is explained with reference to FIG. 8.

Referring to FIG. 8, a TV 1000 according to one embodiment of the present invention makes a request for data for VCHB (virtual channel browsing) activation to a CP 1040 [S1001]. In response to the request, the CP 1040 transmits data, in which event information and thumbnail image are combined with each other, to the TV 1000 [S1002].

The TV 1000 saves a thumbnail image corresponding to each event of a currently broadcasted channel in a memory [S1003]. The memory may include a DRAM or flash memory built in the TV 1000 or a memory of an external STB.

The TV 1000 periodically monitors a channel, in which an event change occurs with reference to a current timing point, in a manner of estimating an end time of an event of each channel using start time information and total running time information of an event included in the data transmitted by the CP 1040 [S1004].

If it is detected that an event change occurs in a specific channel, the TV 100 makes a request for new event information and thumbnail image for the specific channel to the CP 1040 [S1005]. In response to the request, the CP 1040 transmits the requested event information and thumbnail image for the specific channel to the TV 1000 [S1006].

This design may be advantageous in that informations and thumbnails images of all channels need not to be received for channel browsing each time. Moreover, a data processing speed may be enhanced as well.

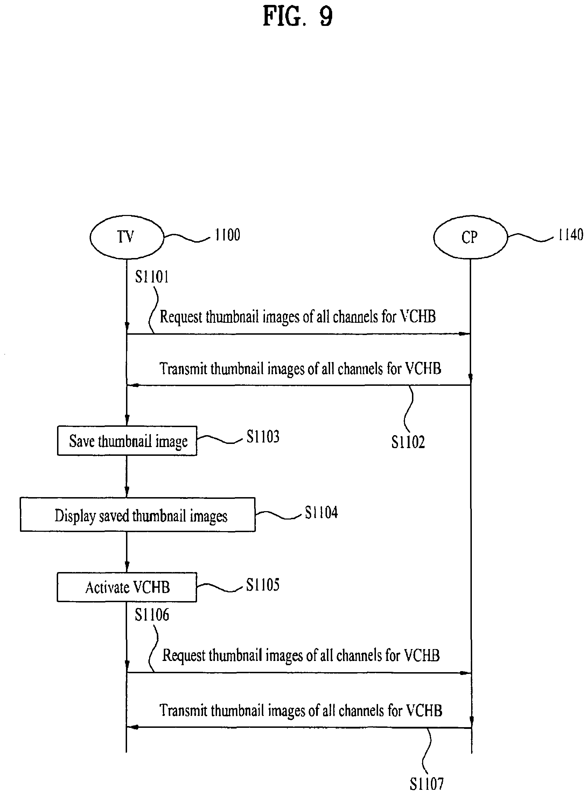

FIG. 9 is a flowchart for another example of a process for performing a virtual channel browsing function according to one embodiment of the present invention. In the following description, another example of a process for performing a virtual channel browsing function according to one embodiment of the present invention is explained with reference to FIG. 9.

Referring to FIG. 9, a TV 1100 according to one embodiment of the present invention makes a request for data for VCHB (virtual channel browsing) activation to a CP 1140 [S1101]. In response to the request, the CP 1140 transmits data, in which event information and thumbnail image are combined with each other, to the TV 1100 [S1102].

The TV 1100 saves a thumbnail image corresponding to each event of a currently broadcasted channel in a memory [S1103]. The memory may include a DRAM or flash memory built in the TV 1100 or a memory of an external STB.

The TV 1100 primarily displays a previously saved thumbnail image corresponding to an event of each channel currently broadcasted [S1104].

Next to the step S1104, assume that the TV 110 has activated a channel browsing function according to one embodiment of the present invention and then enters a different general screen [not shown in FIG. 9].

In ding so, if a command for activating a channel browsing function again using the TV 100 is received [S1105], the TV 1100 makes a request for event informations and thumbnails images of all channels to the CP 1140 [S1106]. In response to the request, the CP 1040 transmits the requested event informations and thumbnail images of all channels to the TV 1100 [S1107].

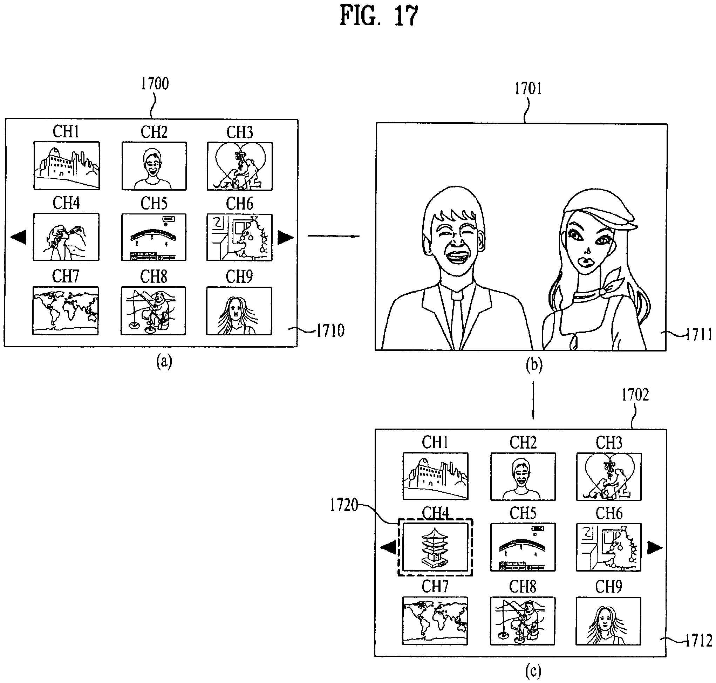

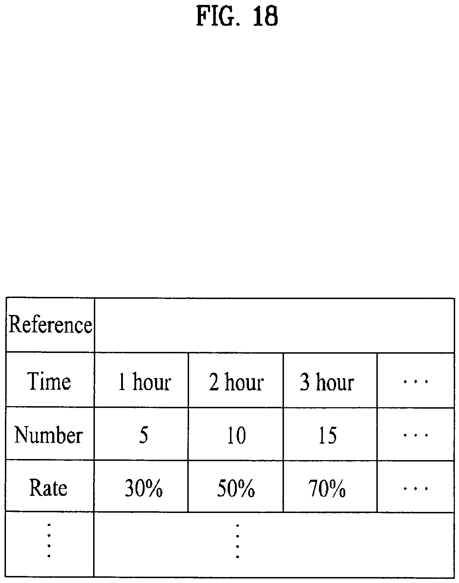

In particular, according to the embodiment shown in FIG. 9, if a user activates a 1^{st} channel browser screen, switches the 1^{st} channel browser screen to a different screen and then activates a 2^{nd} channel browser screen, assume a case that all data related to a channel browser are reset, by which the scope of the appended claims and their equivalents of the present invention may be non-limited. Alternatively, an embodiment of displaying a switched channel only without resetting is possible, which will be described in detail with reference to FIG. 17 and FIG. 18 later.

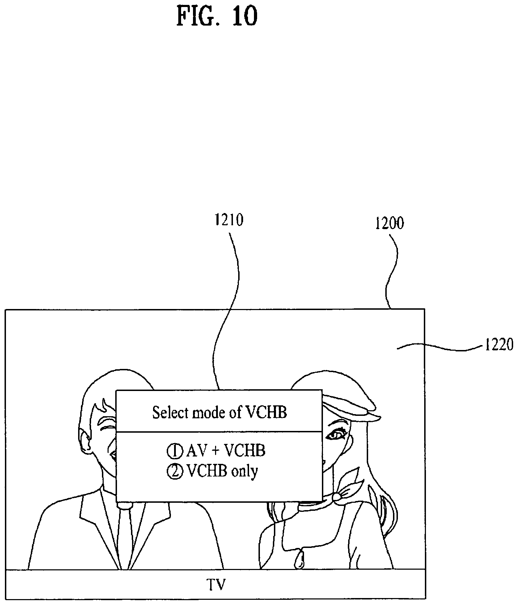

FIG. 10 is a diagram of a user interface for selecting a 1^{st} mode of a virtual channel browsing function according to one embodiment of the present invention. In the following description, a user interface for selecting a 1^{st} mode of a virtual channel browsing function according to one embodiment of the present invention is explained with reference to FIG. 10.

Referring to FIG. 10, a 1^{st} mode of a virtual channel browsing function according to one embodiment of the present invention is designed to be classified into two kinds of categories. While a display apparatus 1200 according to one embodiment of the present invention displays a general broadcast screen 1220, if a user of the display apparatus 1200 inputs a command for activating a virtual channel browsing, an OSD popup window 1210 for selecting a mode is outputted. In particular, video data of the general broadcast screen 1220 is received via the tuner 110 shown in FIG. 2 and video data corresponding to the OSD popup window 1210 is generated by the OSD generating unit 340 shown in FIG. 3.

The aforementioned 2 kinds of the video data are finally synthesized together by the mixer 350 shown in FIG. 3 and the formatter 360 shown in FIG. 3 changes the synthesized video data into a format outputtable to a screen. And, the display 180 is designed to output the data format changed by the formatter 360 to be outputted to a screen.

In doing so, the user may select a 1^{st} option for simultaneously outputting both a currently displayed general broadcast screen 1220 and a channel browsing screen or a 2^{nd} option for displaying the channel browsing screen only by making the currently displayed general broadcast screen 1220 disappear from the screen.

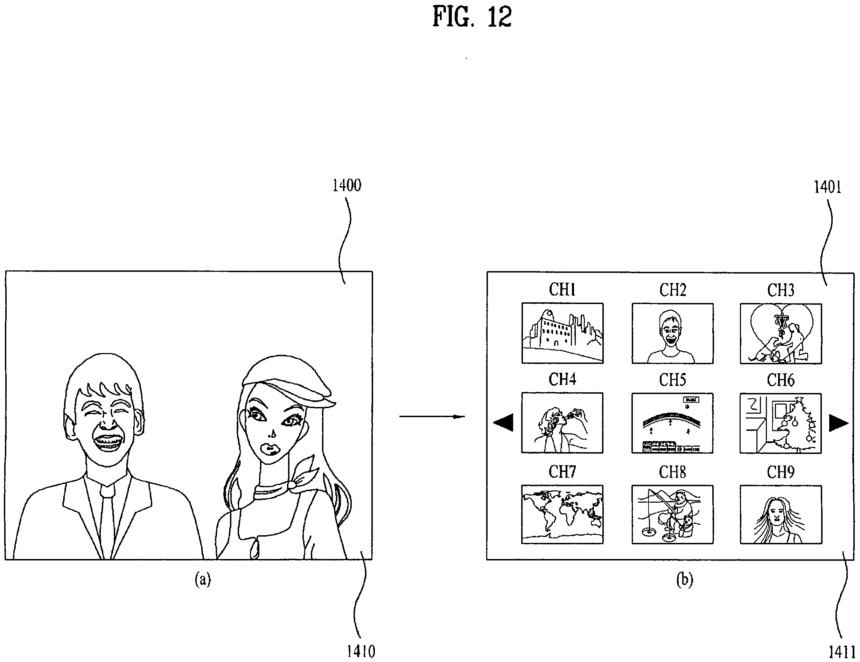

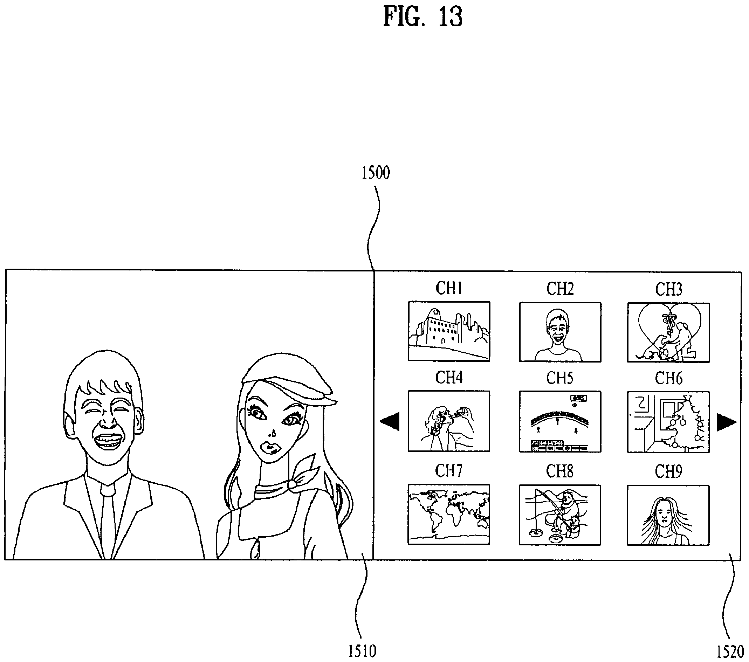

According to the 1^{st} option, it is advantageous in enabling a multitasking of a currently viewed broadcast screen and a channel browsing. According to the 2^{nd} option, visibility to a channel browsing screen may be enhanced. In particular, the 1^{st} option will be described in detail with reference to FIG. 13 and the 2^{nd} option will be described in detail with reference to FIG. 12, later.

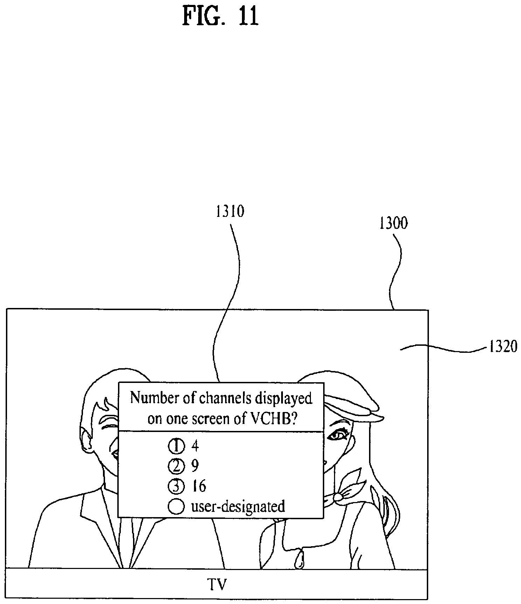

FIG. 11 is a diagram of a user interface for selecting a 2^{nd} mode of a virtual channel browsing function according to one embodiment of the present invention. In the following description, a user interface for selecting a 2^{nd} mode of a virtual channel browsing function according to one embodiment of the present invention is explained with reference to FIG. 11.

First of all, the number of channels displayed on a virtual channel browsing function activated screen according to one embodiment of the present invention is designed to be selected by a user. Considering the number of channels provided in a digital broadcasting environment or the number of channels to increase in the future, it may be difficult to output all channels to a single screen. Of course, it may be possible to display all thumbnail images corresponding to 100 channels on a single screen for example, which may cause a problem of visibility.

Referring to FIG. 11, while a general broadcast screen 1320 is displayed on a display apparatus 1300 according to one embodiment of the present invention, if a user of the display apparatus 1300 inputs a command for activating a virtual channel browsing, an OSD popup window 1310 for selecting the number of channels to be displayed on a channel browsing screen is outputted. In particular, video data of the general broadcast screen 1320 is received via the tuner 110 shown in FIG. 2 and video data corresponding to the OSD popup window 1310 is generated by the OSD generating unit 340 shown in FIG. 3.

The aforementioned 2 kinds of the video data are finally synthesized together by the mixer 350 shown in FIG. 3 and the formatter 360 shown in FIG. 3 changes the synthesized video data into a format outputtable to a screen. And, the display 180 is designed to output the data format changed by the formatter 360 to be outputted to a screen.

Of course, the OSD shown in FIG. 10 and the OSD shown in FIG. 11 may be designed to be displayed sequentially, in reverse order, or simultaneously.

FIG. 12 is a diagram of a 1^{st} screen of activating a virtual channel browsing function in accordance with a mode selected in FIG. 10 or FIG. 11. In the following description, a 1^{st} screen of activating a virtual channel browsing function in accordance with a mode selected in FIG. 10 or FIG. 11 is explained with reference to FIG. 12.

First of all, assume that a user selects an option of outputting thumbnail images of channel browsing targets by excluding a general broadcast screen in FIG. 10 and that the maximum number of channels of channel browsing targets is set to 9 in FIG. 11.

Referring to FIG. 12 (a), while a display apparatus 1400 according to one embodiment of the present invention displays a general broadcast screen 1410 by processing broadcast data received from the tuner 110 shown in FIG. 2, if a command for initiating a virtual channel browsing function is inputted from the remote controller 200 shown in FIG. 2, the general broadcast screen 1410 is switched to an OSD screen shown in FIG. 12 (b).

In particular, referring to FIG. 12 (b), a display apparatus 1401 according to one embodiment of the present invention outputs an OSD 1411 including thumbnail images of currently broadcasted events on total 9 channels. In doing so, the thumbnail images of the 9 channels are received from the network interface unit 130 shown in FIG. 2 and the OSD generating unit 340 shown in FIG. 3 is designed to output OSD data including a representative image of a broadcast program currently broadcasted on each of the channels using the received thumbnail images. In more particular, the network interface unit 130 accesses the CP 840 shown in FIG. 6 and then receives the thumbnail image data per channel for VCHB (virtual channel browsing) screen configuration.

In case that there exist other channel browsing completed channels exist as well as the 9 channels shown in FIG. 12 (b), right and left arrows are outputted together, as shown in FIG. 12 (b). In this case, each of the arrows plays a role in indicating that there are more channel browsing completed channels.

FIG. 13 is a diagram of a 2^{nd} screen of activating a virtual channel browsing function in accordance with a mode selected in FIG. 10 or FIG. 11. In the following description, a 2^{nd} screen of activating a virtual channel browsing function in accordance with a mode selected in FIG. 10 or FIG. 11 is explained with reference to FIG. 13.

First of all, assume that a user selects an option of outputting thumbnail images of channel browsing targets together with a general broadcast screen in FIG. 10 and that the maximum number of channels of channel browsing targets is set to 9 in FIG. 11.

In doing so, while a display apparatus 1400 according to one embodiment of the present invention displays a general broadcast screen 1410, as shown in FIG. 12 (a), if a command for initiating a virtual channel browsing function is inputted, the general broadcast screen 1410 is switched to an OSD screen shown in FIG. 13.

In particular, referring to FIG. 13, a display apparatus 1500 according to one embodiment of the present invention outputs an OSD 1520 including thumbnail images of currently broadcasted events on total 9 channels together with a previously viewed general broadcast screen 1510.

An inner operation process of the display apparatus 1500 to output the screen shown in FIG. 3 is described in detail as follows. First of all, the video data in the broadcast data received from the tuner 110 shown in FIG. 2 and the per-channel thumbnail image data received from the network interface unit 130 shown in FIG. 2 are synthesized together by the mixer 350 shown in FIG. 3. Of course, the per-channel thumbnail image data may be pre-processed by the OSD generating unit 340 shown in FIG. 3.

Therefore, it may be advantageous for a user to monitor other channels by avoiding interruption of viewing a current broadcast. Although the drawings described in the following are provided on the assumption of FIG. 12, if the drawings described in the following are designed on the assumption of FIG. 13, it may obviously pertain to the scope of the appended claims and their equivalents of the present invention. In consideration of design modification by those skilled in the art or user's convenience, the OSD shown in FIG. 12 or the OSD shown in FIG. 13 may be determined.

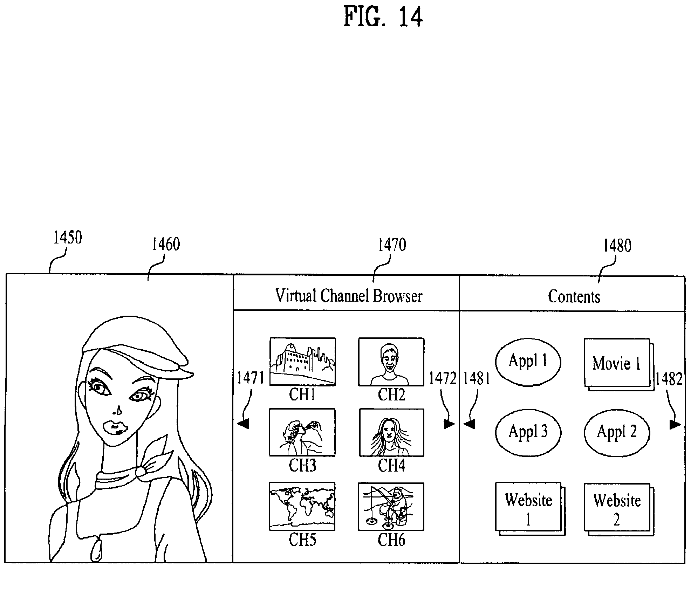

FIG. 14 is a diagram of a virtual channel browsing screen according to another embodiment of the present invention. In the following description, a virtual channel browsing screen according to another embodiment of the present invention is explained with reference to FIG. 14.

First of all, an OSD generating unit of a display apparatus 1450 according to another embodiment of the present invention may generate different video data by being divided into 3 kinds of regions. For instance, referring to FIG. 14, a 1^{st} region 1460 is designed to receive and output a live broadcast program received from a tuner.

A 2^{nd} region 1470 is designed to output a thumbnail image of a currently broadcast program per channel received by a network interface from a CP. And, a 3^{rd} region 1480 is designed to output contents previously saved in a memory of the display apparatus or a list of contents related to each website.

Arrow shapes 1471, 1472, 1481 and 1482 displayed within the 2^{nd} region 1470 and the 3^{rd} region 1480 play roles as indicators, each of which indicates that other items exist in addition to items displayed on a current screen, respectively.

For instance, if a pointer of the remote controller (e.g., the motion remote controller, the space remote controller, etc.) shown in FIG. 4 or FIG. 5 is placed at each of the arrow shapes 1471, 1472, 1481 and 1482, a current page is automatically turned to a next or previous page. If no other items exist in addition to the items displayed on the current screen, the aforementioned arrow shapes are not displayed to provide a user with related information.

Finally, although one embodiment of a channel browsing is mainly described in this specification, the scope of the appended claims and their equivalents of the present invention may identically apply to other contents (e.g., applications, movie contents, website contents, etc.).

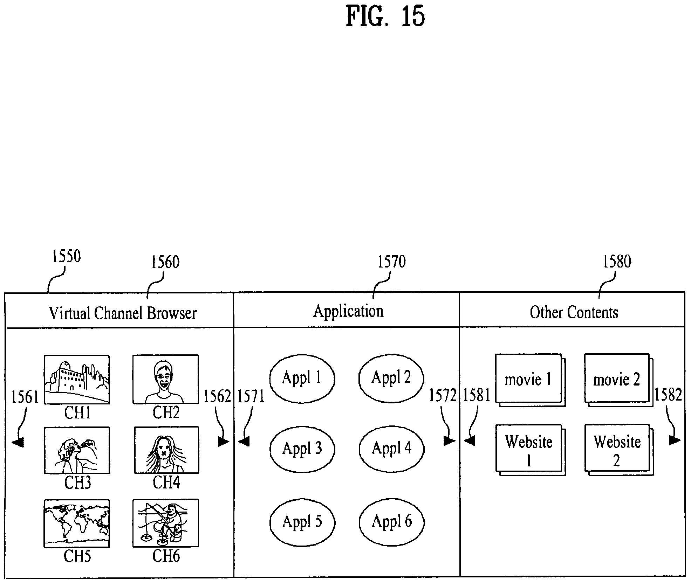

FIG. 15 is a diagram of a virtual channel browsing screen according to a further embodiment of the present invention. In the following description, a virtual channel browsing screen according to a further embodiment of the present invention is explained with reference to FIG. 15.

First of all, an OSD generating unit of a display apparatus 1550 according to a further embodiment of the present invention may generate different video data by being divided into 3 kinds of regions. For instance, referring to FIG. 15, a 1^{st} region 1560 is designed to output a thumbnail image of a currently broadcast program per channel received by a network interface from a CP. And, a 2^{nd} region 1570 is designed to output a list of applications previously saved in a memory of the display apparatus.

And, a 3^{rd} region 1580 is designed to output a list of other contents (e.g., movie contents, contents related to a website, etc.) except applications. Unlike the former embodiment shown in FIG. 14, according to the embodiment shown in FIG. 15, items not related to a channel source are displayed in a manner of being categorized into an application group and a non-application group again.

Therefore, it is advantageous for a user to access items belonging to a user-preferred group more easily and quickly.

Arrow shapes 1561, 1562, 1571, 1572, 1581 and 1582 displayed within the 1^{st} region 1560, the 2^{nd} region 1570 and the 3^{rd} region 1580 play roles as indicators, each of which indicates that other items exist in addition to items displayed on a current screen, respectively. Regarding this, the redundant description with reference to FIG. 14 shall be omitted from the following description.

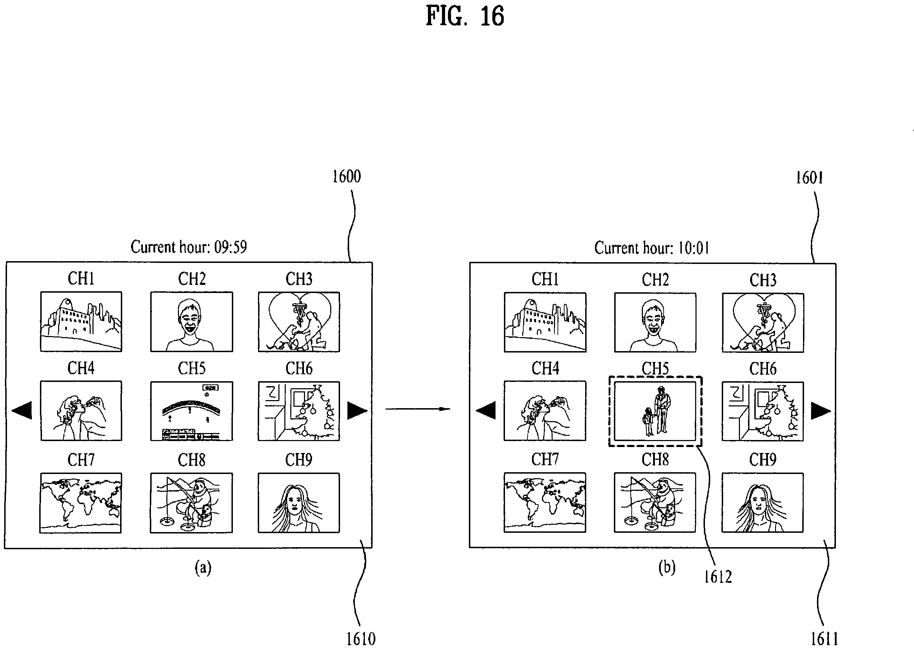

FIG. 16 is a diagram of a virtual channel browsing OSD changing based on a time flow according to one embodiment of the present invention. In the following description, a virtual channel browsing OSD changing based on a time flow according to one embodiment of the present invention is explained with reference to FIG. 16.

Referring to FIG. 16 (a), a display apparatus 1600 according to one embodiment of the present invention outputs an OSD screen 1610 for 9 channels in accordance with activation of a virtual channel browsing function. Assume that an outputted time of the OSD screen 1610 is 09: 59 AM.

If a current hour is 10:01 AM, referring to FIG. 16 (b), a display apparatus 1601 is designed to display a changed OSD screen 1611. In particular, since an event on CH5 broadcasted at 09:59 is changed into an event on CH5 broadcasted at 10:01 AM only, a changed thumbnail image 1612 of CH5 is displayed in a manner different from those of the rest of the channels.

In the following description, an inner operation process of the display apparatus 1600/1601 to output the screen shown in FIG. 16 is explained in detail.

First of all, the network interface 130 shown in FIG. 2 receives per-channel thumbnail image data for VCHB screen configuration from the CP 840 shown in FIG. 8. Using the received thumbnail image data, the OSD generating unit 340 shown in FIG. 2 generates a 1^{st} OSD 1600.

After elapse of time, the display apparatus may receive metadata (e.g., EIT) indicating that a broadcast program of a specific channel has been changed from the CP or the broadcast station. The display apparatus then receives a thumbnail image of the broadcast program changed channel using the network interface 130. Subsequently, the OSD generating unit 340 shown in FIG. 2 generates a 2^{nd} OSD 1611 using the received thumbnail image data.

If a thumbnail image of each channel is outputted in the same manner of the related art irrespective of an event change, a user may have a problem in detecting an occurrence of a channel change among a plurality of channels. Besides, if information on an event starting just now is notified to a user, it may raise accessibility to a channel of the event starting just now.

A method of determining whether an event is changed on each channel may be understood by referring to FIGs. 6 to FIG. 8. For example, a TV collects information on a start time and running time of an event from a CP and then estimates an end time of each event. By comparing the estimated end time to a current time, it may be able to check whether an event of a prescribed channel is ended (i.e., whether the event will be changed into another event). In doing so, the TV makes a request for a new thumbnail image for an event change occurring channel to the CP and then outputs the received new thumbnail image to be identifiable from thumbnails image of other channels.

FIG. 17 is a diagram of a virtual channel browsing OSD changing based on a screen change according to one embodiment of the present invention. In the following description, a virtual channel browsing OSD changing based on a screen change according to one embodiment of the present invention is explained with reference to Fig. 17.

First of all, comparing FIG. 17 to FIG. 16, the former description with reference to FIG. 16 assumes a case that a channel browsing screen is continuously maintained. Yet, FIG. 17 assumes a following case. First of all, when a user currently watches a channel browsing screen, the user turns out or off the currently watched channel browsing screen and then watches another general broadcast screen or the like. Secondly, the user then activates a channel browsing function again.

Referring to FIG. 17 (a), a display apparatus 1700 according to one embodiment of the present invention displays thumbnail images of events currently broadcasted on total 9 channels for example. If a user of the display apparatus 1700 selects to activate a different function (e.g., selection of a general broadcast screen), referring to FIG. 17 (b), a display apparatus 1701 outputs a general broadcast screen 1711. In doing so, the display apparatus 1700/1701 is designed to save a thumbnail image 1710 outputted on switching the screen to the screen shown in FIG. 17 (b) or a corresponding event information in a memory.

Finally, if the user activates a channel browsing function again, referring to FIG. 17 (c), a display apparatus 1702 according to one embodiment of the present invention outputs a channel browsing OSD screen 1712. Comparing FIG. 17 (c) to FIG. 17 (a), FIG. 17 (c) shows that CH4 1720 having a changed thumbnail image is displayed in a manner of being identifiable from other channels.

Inner operation process of the display apparatus 1700/1701/1702 to output the screen shown in FIG. 17 is described in detail as follows.

First of all, the network interface 130 shown in FIG. 2 receives per-channel thumbnail image data for VCHB screen configuration from the CP 840 shown in FIG. 8. Using the received thumbnail image data, the OSD generating unit 340 shown in FIG. 2 generates a 1^{st} OSD 1700.

In doing so, if a user transmits a command signal for switching to a general broadcast channel to the display apparatus using the remote controller 200 shown in FIG. 2, a corresponding screen 1711 is displayed.

After elapse of predetermined time, if the user transmits a command signal for activating VCHB screen to the display apparatus using the remote controller 200 shown in FIG. 2, the control unit 170 shown in FIG. 2 determines whether a broadcast program is changed on a specific channel. For instance, at a timing point of switching FIG. 17 (a) to FIG. 17 (b), the control unit 170 saves the information or thumbnail image of a broadcast program of each channel in the storage unit 140. Moreover, if a command signal for activating the VCHB is received, the control unit 170 accesses the memory 140, checks previous channel information, and then controls the network interface unit 130 to receive current channel information again.

Hence, the control unit 170 compares the previous channel information and the current channel information with each other and the OSD generating unit generates video data, which is configured in a manner that a region of a broadcast program changed channel is highlighted only, as shown in Fig. 17 (c).

Meanwhile, the remote controller 200 shown in FIG. 2 may correspond to the motion remote controller 200 shown in Fig. 4 or FIG. 5. Hence, it may become highly probable that a user selects a specific channel (e.g., a broadcast program changed channel) 1720 occupying a space relatively wider than a channel region having no change of a broadcast program using the motion remote controller 200 shown in FIG. 5. If a selectable region is designed to extend to the highlighted part, the motion remote controller 200 is more advantageous than a general remote controller in selecting CH4 1720 more quickly.

Therefore, it is advantageous for a user to easily check and select a changed channel in a previously checked channel browsing screen and a currently reactivated channel browsing screen. Unlike the former embodiment shown in FIG. 16, it may be necessary for the embodiment shown in FIG. 17 to consider one more factor. In aspect of a user, if a different channel is identifiably displayed by comparing FIG. 17 (a) and FIG. 17 (c) to each other, it may be advantageous or disadvantageous. Hence, a corresponding reference is described with reference to FIG. 18 as follows.

FIG. 18 is a diagram of a database for defining reference values to design the OSD shown in FIG. 17. In the following description, a database for defining reference values to design the OSD shown in FIG. 17 is explained with reference to FIG. 18.

As reference factors to design the OSD shown in FIG. 17, time factor, number factor, rate factor and the like may be taken into consideration, as shown in FIG. 18. And, implementation of another embodiment by combination of theses factors may pertain to the scope of the appended claims and their equivalents of the present invention.

For instance, after a 1^{st} channel browsing function has been activated, a different function is activated. Subsequently, when a 2^{nd} channel browsing function is activated again, if a predetermined duration expires, it may be probable that there are excessively many changed channels. Hence, if the predetermined duration expires, it may be preferable that an initial channel browsing information and a subsequently changed channel browsing information are not compared to each other. For example, if a channel browsing function is activated after elapse of 5 hours, all channels may be displayed in a manner of being highlighted. This may interrupt user's channel change monitoring.

For another instance, after a 1^{st} channel browsing function has been activated, a different function is activated. Subsequently, when a 2^{nd} channel browsing function is activated again, it is determined whether the number of channels having changed events is equal to or greater than a predetermined number. In accordance with the corresponding result, if the number of the channels is equal to or greater than the predetermined number, a changed channel is not highlighted and previous information is designed to be reset.

For a further instance, after a 1^{st} channel browsing function has been activated, a different function is activated. Subsequently, when a 2^{nd} channel browsing function is activated again, it is determined whether a rate of the number of channels having changed events in a total channel number (or a maximum channel number represented on a single screen) is equal to or greater than a predetermined percentage. In accordance with the corresponding result, if the rate is equal to or greater than the predetermined percentage, a changed channel is not highlighted and previous information is designed to be reset.

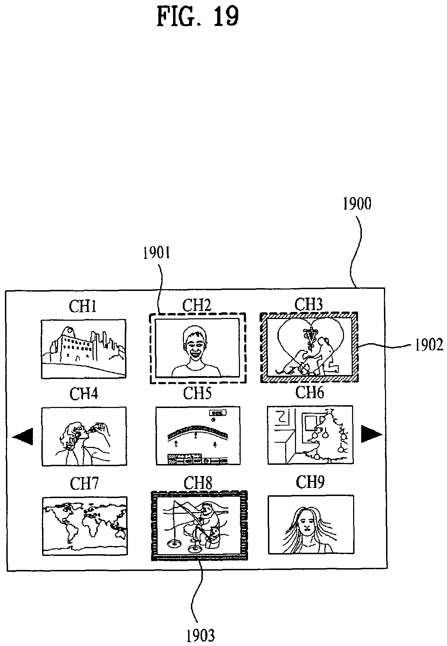

FIG. 19 is a diagram of an OSD for displaying an event information changed channel identifiably in accordance with an extent of time elapse according to one embodiment of the present invention. In the following description, an OSD for displaying an event information changed channel identifiably in accordance with an extent of time elapse according to one embodiment of the present invention is explained with reference to FIG. 19.

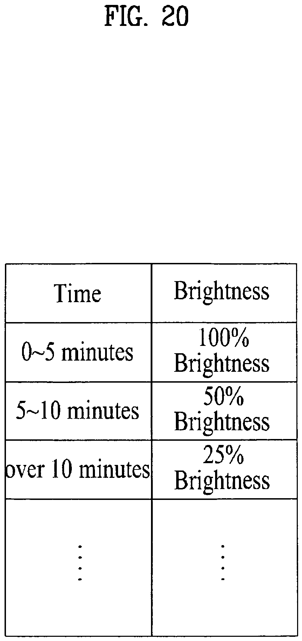

First of all, as mentioned in the foregoing description, a major feature of a virtual channel browsing according to one embodiment of the present invention is characterized in monitoring a channel having a changed event and then displaying the corresponding channels in a manner of highlighting them only. A corresponding embodiment is described in detail with reference to FIG. 19 and FIG. 20 as follows.

Referring to FIG. 19, assume that a display apparatus 1900 according to one embodiment of the present invention has sequential event changes of 3 channels compared with previous channel browsing data. In particular, CH2 1901, CH3 1902 and CH8 1903, each of which event is changed, are displayed on a channel browsing screen in a manner of being highlighted, as show in FIG. 19.

Yet, it may be easily observed that the changed channels are highlighted differently, as shown in FIG. 19. For instance, the channel 1903 having a most recently changed event is displayed at highest resolution, the channel 1902 having an event changed before the most recently changed event is displayed at intermediate resolution, and the channel 1901 having an earliest changed event is displayed at lowest resolution. Of course, in order to display channels differently in accordance with time extent, at least one of color, size, additional information and the like may be usable for example. And, the scope of the appended claims and their equivalents of the present invention may be non-limited by the embodiment described with reference to FIG. 19.

FIG. 20 is a diagram of a database for defining reference values to design the OSD shown in FIG. 19. In the following description, a database for defining reference values to design the OSD shown in FIG. 19 is explained with reference to FIG. 20.

Referring to FIG. 20, a highlighting method may be differentially set in accordance with event changed elapse time. In case that a predetermined time elapses, event changed channels may be designed to be displayed in the same manner of other channels having no event changes.

For instance, a mark having 100% of resolution is given to a corresponding channel if about 5 minutes elapses from an event changed timing point. For another instance, a mark having 50% of resolution is given to a corresponding channel if about 5 to 10 minutes elapses from an event changed timing point. For another instance, a mark having 25% of resolution is given to a corresponding channel if about 10 minutes elapses from an event changed timing point. For further instance, if a predetermined duration expires, event changed channels may be displayed in the same manner of other normal channels (e.g., channels having no event changes).

The embodiments described with reference to FIG. 19 and FIG. 20 are designed by considering the needs of a user who does not want to display a channel having an event changed excessively long time ago in a manner of highlighting the corresponding channel.

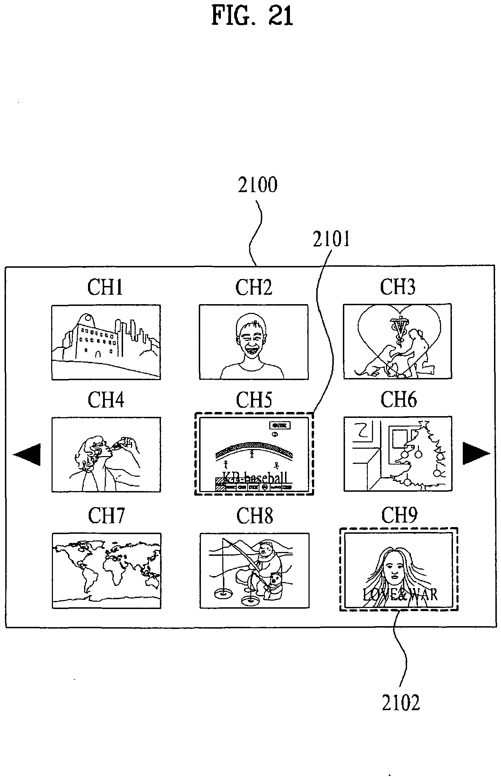

FIG. 21 is a diagram of an OSD for displaying additional information added to an event information changed channel according to one embodiment of the present invention. In the following description, an OSD for displaying additional information added to an event information changed channel according to one embodiment of the present invention is explained with reference to FIG. 21.

First of all, the former embodiment described with reference to the previous drawings relates to a method of displaying a thumbnail image of a channel having a changed event in a manner that the thumbnail image is different from that of another general channel. In the description with reference to FIG. 21, proposed is a solution for discriminating the corresponding channel from other general channels by adding additional information.

Referring to FIG. 21, while a channel browsing screen is outputted, if an event change occurring channel is detected, a display apparatus 2100 according to one embodiment of the present invention generates an OSD containing additional information.

For instance, if an event or broadcast program 'KB baseball' is newly started on CH5 with reference to a current hour, a thumbnail image 2101 containing a corresponding title is displayed. For another instance, if an event or broadcast program 'Love War' is newly started on CH9 with reference to a current hour, a thumbnail image 2102 containing a corresponding title is displayed.

Moreover, an inner operation process of a display apparatus 2100 for outputting the screen shown in FIG. 21 is described in detail as follows.

First of all, the network interface 130 shown in FIG. 2 receives per-channel thumbnail image data for VCHB screen configuration from the CP 840 shown in FIG. 8. Using the received thumbnail image data, the OSD generating unit 340 shown in FIG. 2 generates primary OSD data.

Meanwhile, assume a case that broadcast programs on CH5 and CH9 are changed as time elapses, as shown in FIG. 21. In doing so, a display apparatus according to one embodiment of the present invention may be able to determine whether a broadcast program is changed on a specific channel based on EIT information received from a broadcast station or separate metadata (e.g., a representative thumbnail image of a currently broadcasted program per channel, time information on the program, etc.) received from a CP.

Moreover, the display apparatus may detect a title of a currently broadcasted program using title_text field of the EIT information received from the broadcast station or may detect a title of a currently broadcasted program based on the separate metadata (e.g., title information of a currently broadcasted program per channel) received from the CP.

Therefore, the OSD generating unit 340 of the display apparatus is designed to highlight a channel of a chanted broadcast program and simultaneously to generate secondary OSD data indicating a title of each event. According to this design, a user of the display apparatus may have an enhanced rate of recognizing a channel on which a changed broadcast program is outputted and may be able to easily check which broadcast program has started recently, which is the unique advantages of the present invention.

In particular, a thumbnail image is configured in a manner of separate additional information (e.g., title) is excluded from channels having no event changes, thereby facilitating a user to monitor a channel of a changed event.

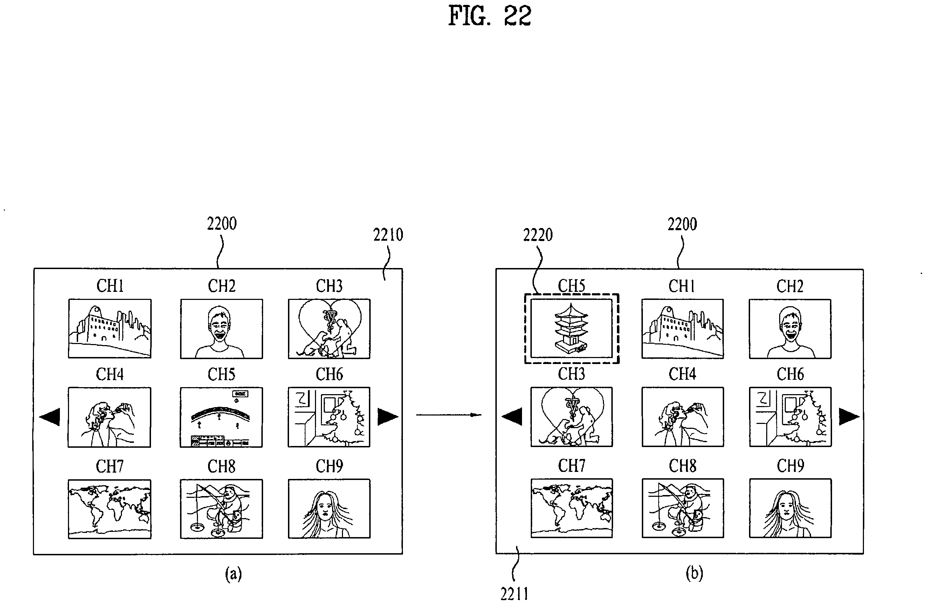

FIG. 22 is a diagram of an OSD for displaying an event information changed channel by adjusting a position of the channel according to one embodiment of the present invention. In the following description, an OSD for displaying an event information changed channel by adjusting a position of the channel according to one embodiment of the present invention is explained with reference to FIG. 22.

Referring to FIG. 22 (a), a display apparatus 2200 according to one embodiment of the present invention displays a 1^{st} channel browsing screen 2210 including a thumbnail image corresponding to a broadcast program currently outputted on each channel.

In doing so, assume that a broadcast program (i.e., an event) of a specific channel has been changed. In particular, FIG. 22 shows a case that a broadcast program on CH5 has been changed. If so, referring to FIG. 22 (b), a display apparatus 2210 according to one embodiment of the present invention displays a 2^{nd} channel browsing screen 2211 different from the aforesaid 1^{st} channel browsing screen 2210.

Although the previous drawings relate to a method of simply highlighting a channel having a changed broadcast program, if a position of a region 2220 indicating a channel having a changed broadcast program is changed, as shown in FIG. 22 (b), it may pertain to the scope of the appended claims and their equivalents of the present invention.

Of course, although FIG. 22 (b) shows that the region 2220 is set to be placed at a most left top end portion of a screen, the region 2220 may be designed to be placed at a center of the screen to raise a user's recognition rate. Moreover, if a path of changing a current position to a preset position is continuously displayed, it may pertain to the scope of the appended claims and their equivalents of the present invention.

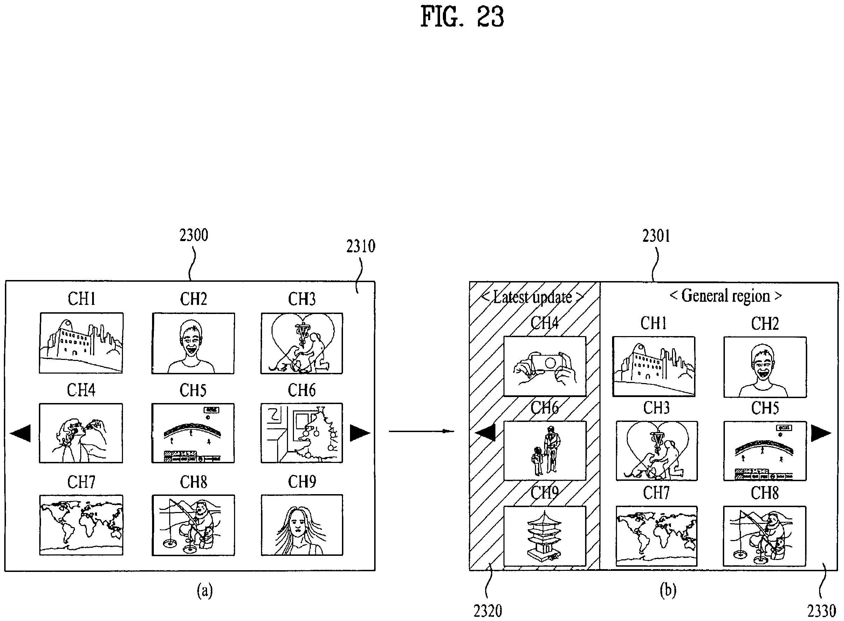

FIG. 23 is a diagram of an OSD for identifiably displaying a group of event information changed channels and a group of event information unchanged channels according to one embodiment of the present invention. In the following description, an OSD for identifiably displaying a group of event information changed channels and a group of event information unchanged channels according to one embodiment of the present invention is explained with reference to FIG. 23.

First of all, the aforementioned description with reference to FIG. 22 corresponds to an embodiment of changing a region indicating a broadcast program changed channel into another region. Yet, in order to enhance user's convenience, FIG. 23 corresponds to an embodiment of grouping channels into a group of broadcast program changed channels and a group of broadcast program unchanged channels and displaying both of the groups simultaneously.

Referring to FIG. 23 (a), a display apparatus 2300 according to one embodiment of the present invention displays a 1^{st} channel browsing screen 2310 including a thumbnail image corresponding to a broadcast program currently outputted on each channel.

In doing so, if a broadcast program (i.e., an event) of a specific channel is changed, referring to FIG. 23 (b), a display apparatus 2301 displays 2^{nd} channel browsing screens 2320 and 2330 each of which is different from the aforesaid 1^{st} channel browsing screen 2310.

For instance, a region indicating a broadcast program changed channel is collected into a 1^{st} group region 2320 and a region indicating a broadcast program unchanged channel is collected into a 2^{nd} group region 2330.

Moreover, if a preset time elapses, the channel belonging to the 1^{st} group region 2320 may not be further maintained as a latest update item. Hence, if a preset time (e.g., 10 minutes, a user set time, etc.) elapses from a broadcast program changed timing point, the corresponding channel may be designed to be automatically dragged from the 1^{st} group region 2320 to the 2^{nd} group region 2330.

Therefore, a user is facilitated to identify latest updated channels from other channels non-updated. In order to solve a problem that a position of an updated channel is permanently fixed, it may provide a user interface for dragging the corresponding channel from the 1^{st} group region to the 2^{nd} group region automatically if a preset time expires.

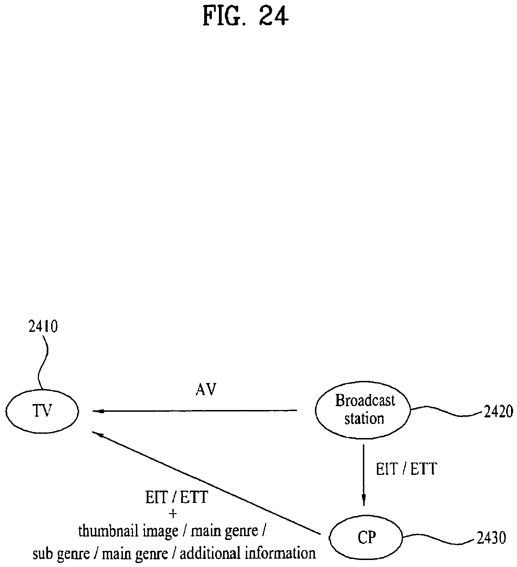

FIG. 24 is a diagram of a total system for reinforcing a search function on a virtual channel browsing screen according to one embodiment of the present invention. In the following description, a total system for reinforcing a search function on a virtual channel browsing screen according to one embodiment of the present invention is explained with reference to FIG. 24.

Referring to FIG. 24, a TV 2410 according to one embodiment of the present invention may include a single tuner and may be able to receive AV data for a general broadcast program from a broadcast station 2420.

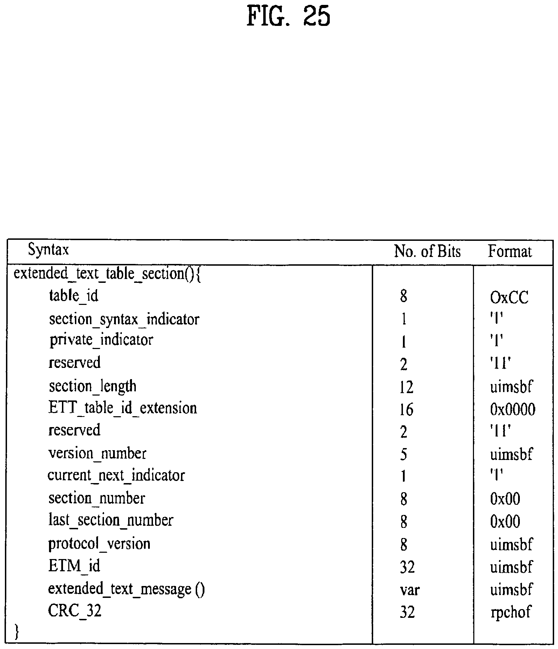

A CP 2430 configured to process data for virtual channel browsing primarily collects information on a broadcast program from the broadcast station 2420. In particular, the information on the broadcast program may correspond to a table format of EIT (event information table) or ETT (extended text table) type. And, the ETT shall be described in detail with reference to FIG. 25 later. Moreover, an event described in this specification may correspond to a broadcast program unit for example.

The CP 2430 depends on the EIT information and the ETT information received from the broadcast station 2420 and also secondarily adds thumbnail image data corresponding to event information of each currently broadcasted channel.

Moreover, the CP 3430 may additionally receive genre information and the like from the broadcast station 2420. And, the CP 3430 may tertiarily adds main genre information, sub-genre information and additional information (e.g., keyword, tag information, etc.), each of which corresponds to event information of each currently broadcasted channel.

The CP 2430 may be able to use the received EIT or ETT information as it is. Alternatively, the CP 2430 may define and use more compact data configured with information (e.g., event start time, total running time of event, title information, etc.) necessary for channel browsing only.

Having received a request for activation of a virtual channel browsing function from the TV 2410, the CP 2430 delivers EIT/ETT information, thumbnail image data corresponding to each event, genre information, the aforesaid additional information and the like to the TV 2410. Yet, as mentioned in the foregoing description, basic information necessary for channel browsing is extracted and transmitted instead of transmitting EIT/ETT intactly.

Therefore, the TV 2410 according to one embodiment of the present invention advantageously needs not to perform an operation of capturing a screen by scanning all channels one by one each time a channel browsing function is activated.

According to another embodiment of the present invention, the CP 2430 may be designed to transmit thumbnail image data corresponding to each event and the broadcast station 2420 may be designed to transmit EIT/ETT containing information on each event. In this case, the TV 2410 preferentially performs data processing on two kinds of data respectively received via different paths and may activate a channel browsing function of displaying image information of all currently broadcasted channels by processing the combined two kinds of data.

FIG. 25 is a diagram for one example of a data structure usable in the course of performing a virtual channel browsing function according to one embodiment of the present invention. In the following description, one example of ETT (extended text table) usable in the course of performing a virtual channel browsing function according to one embodiment of the present invention is explained with reference to FIG. 25. Yet, as mentioned in the foregoing description, in order to perform a virtual channel browsing function, the ETTT format shown in FIG. 25 can be entirely used. Alternatively, necessary basic information is just extracted from the ETT format and used.

In ETT shown in FIG. 25, table_id field indicates a unique table identifier (ID) assigned to uniquely identify ETT. In particular, the table_id field indicates a value indicating that a table having a received section belong thereto is ETT.

A section_syntax_indicator field may be set to a value of 1 and may mean that a general MPEG-2 section syntax follows a section_length field. For example, '1' is assigned to a private_indicator field. The section_length field indicates a remaining field of a section after the section_length field to an end of this section by byte unit.

An ETT_table_id_extension field is a field necessary to secure uniqueness of each ETT instance when a plurality of ETTs appear in a transport stream packet having a common PID value.

A version_number field indicates a version value of ETT-i. The version_number field may be represented as a remaining value resulting from incrementing a modified content of ETT-I by 1 and then dividing it by 32.

A current_next_indicator field indicates that a transmitted table is always applicable and may be set to 1. A section_number field indicates a number of a corresponding section. And, a last_section_number field indicates a last section number of full ETT.

A protocol_version field is initially set to 0. If a protocol is changed, the protocol_version field is set to a value that is not 0.

An ETM_id field plays a role as an identifier of ETM (extended text message). And, an extended_text_message() field has a format of a multiple string structure.

In particular, the ETM (extended text message) includes various additional informations such as a title of episode, a synopsis of story line, names of actors/actresses and the like.

Moreover, according to another embodiment of the present invention, a CP primarily generates a data structure, which is more compact than a conventional ETT, by extracting minimum information (e.g., ETM, etc.) to be set in accordance with a specific reference on a virtual channel browsing screen instead of using all heavy ETT data shown in FIG. 25. Moreover, a thumbnail image and genre information and the like, which correspond to each event, are added to the primarily generated data structure and are then transmitted to a TV. This design may pertain to the scope of the appended claims and their equivalents of the present invention.

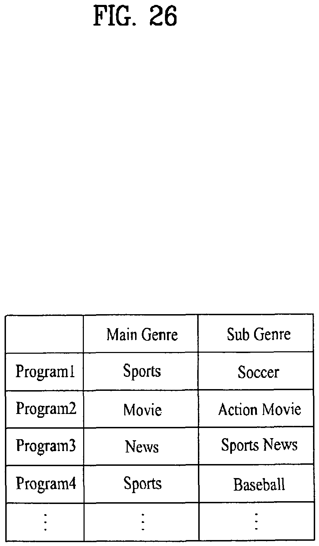

In particular, the genre information may be received from a broadcast station. Alternatively, referring to FIG. 26, a CP independently defines and uses main genre and sub-genre for each event, which pertains to the scope of the appended claims and their equivalents of the present invention.

FIG. 26 is a diagram for another example of a data structure usable in the course of performing a virtual channel browsing function according to one embodiment of the present invention. In the following description, a data structure for defining genre and sub-genre usable in the course of performing a virtual channel browsing function according to one embodiment of the present invention is explained with reference to FIG. 26.

According to one embodiment of the present invention, a CP adds main genre information and sub-genre information by a unit of each event (broadcast program). If a TV makes a request for activation of a virtual channel browsing, the CP transmits the genre information including 2 paths.

For instance, referring to FIG. 26, a main genre of Program 1 is sports and a sub-genre is soccer. A main genre of Program 2 is movie and a sub-genre is action movie. A main genre of Program 3 is news and a sub-genre is sports news. A main genre of Program 4 is sports and a sub-genre is baseball.

In particular, it may be able to use the data format shown in FIG. 26 in the process for configuring a channel browsing screen. And, its detailed embodiment shall be described with reference to FIGs. 33 to 35 later.

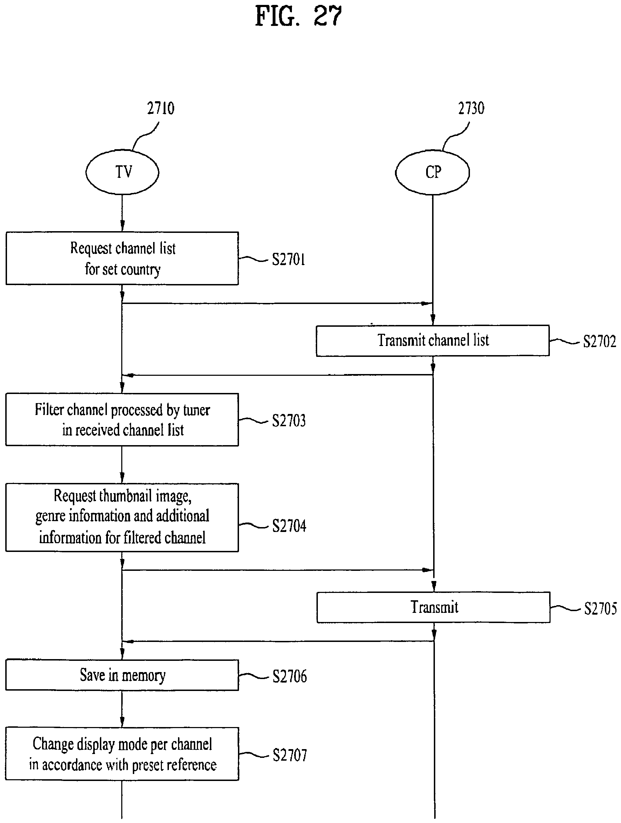

FIG. 27 is a detailed flowchart of a process for performing a virtual channel browsing function according to one embodiment of the present invention. In the following description, a process for performing a virtual channel browsing function according to one embodiment of the present invention is explained in detail with reference to FIG. 27. Yet, the steps shown in FIG. 27 are just exemplary and the scope of the appended claims and their equivalents of the present invention should be determined based on the appended claims.

A TV 2710 according to one embodiment of the present invention makes a request for a channel list to a CP 2730 [S2701]. Moreover, the TV 2710 may be designed to request a channel list for a specific country. The CP (content provider) may include a server that provides data related to a channel browsing screen. Alternatively, an SP (service provider) may be designed to be responsible for the same function of the CP.

The CP 2730 transmits the channel list requested by the TV 2710 [S2702]. The TV 2710 filters off a channel for which the received channel list is searched by a tuner [S2703]. This is designed to consider that the channel list provided by the CP 2730 may be different from a range of channels that can be currently tuned to by the TV 2710.

In order to generate a channel browsing OSD, the TV 2710 makes a request for thumbnail image, genre information , additional information and the like for the filtered channel to the CP 2730 [S2704]. Subsequently, the CP 2730 transmits the data requested in the step S2704 to the TV 2710 [S2705].

The TV 2710 preferentially saves the data transmitted in the step S2705 in the memory [S2706]. Subsequently, the TV 2710 displays a channel browsing screen, which is varying flexibly, automatically or in accordance with a reference previously set by a user [S2707].

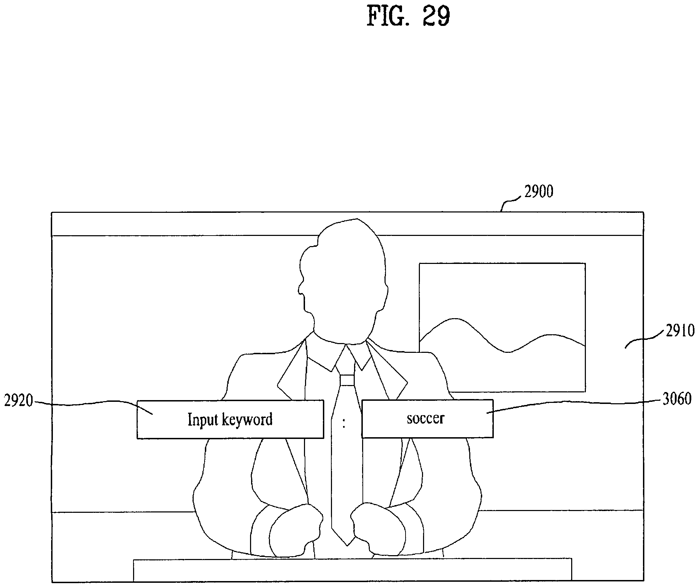

Embodiments in the step S2707 may be mainly classified into three kinds of categories. The description common to the three kinds of categories will be made with reference to FIG. 28 later, a 1^{st} embodiment will be explained with reference to FIGs. 29 to 32 later, a 2^{nd} embodiment will be explained with reference to FIGs. 33 to 35 later, and a 3^{rd} embodiment will be explained with reference to FIGs. 36 to 40 later.

FIG. 28 is a diagram of a main screen of an activated virtual channel browsing function according to one embodiment of the present invention. In the following description, a main screen of an activated virtual channel browsing function according to one embodiment of the present invention is explained with reference to FIG. 28.

First of all, if a channel browsing function is activated using a display apparatus 2800 according to one embodiment of the present invention, referring to FIG. 28, thumbnail images 2850 of programs currently broadcasted on channels are displayed.

As mentioned in the foregoing description, it is advantageous in that a thumbnail image outputted from a channel browsing OSD according to one embodiment of the present invention needs not to be received via a separate broadcast tuner. In particular, a thumbnail image for each channel may be directly received from a CP connected via a network interface. Although FIG. 28 shows a channel browsing screen only, the present invention is characterized in partitioning a screen into a 1^{st} region and a 2^{nd} region, outputting an intact video for a broadcast program of a specific channel to the 1^{st} region, and outputting a channel browsing OSD 2850 shown in FIG. 28 to the 2^{nd} region. This design is one feature of the present invention. A signal of the 1^{st} region is received from a broadcast tuner and a signal of the 2^{nd} region is received from a network interface.

Meanwhile, as the number of channels is rapidly increasing in a digital broadcasting environment, it may be substantially impossible to display thumbnail images of all channels on a single screen. Hence, FIG. 28 shows that the number of channels is limited to 15. One arrow button 2860 is added to a right side of a screen and another arrow button 2870 is added to a left side of the screen, thereby indicating that an additional channel browsing screen exists in advance.

Modes of a channel browsing proposed by the present invention may be classified into a normal mode (indicated by a reference number 2810 in FIG. 28) and special modes (indicated by reference numbers 2820, 2830 and 2840 in FIG. 28) of three categories. The above modes may be displayed as tabs on a top end portion of a screen, as shown in FIG. 28. Of course, modification of positions and shapes of the mode display in accordance with necessity of those skilled in the art may pertain to the scope of the appended claims and their equivalents of the present invention.

If a user selects the normal mode tab 2810 shown in FIG. 28, the display apparatus 2800 does not perform a special filtering operation but displays thumbnail image of programs currently broadcasted on the respective channels identically [2850].

On the other hand, if a user selects one of the special mode tabs 2820, 2830 and 2840 shown in FIG. 28, the display apparatus 2800 performs a special filtering operation and is designed to display an OSD different from the normal channel browsing screen 2850. This is explained in detail with reference to the accompanying drawings.

FIG. 29 is a diagram of a 1^{st} OSD in case of selecting a keyword related option from the main screen shown in FIG. 28. In the following description, a 1^{st} OSD in case of selecting a keyword related option 2820 from the main screen shown in FIG. 28 is explained with reference to FIG. 29.

Referring to FIG. 29, in consideration of a user who attempts to check a filtered channel using a specific keyword on a normal channel browsing screen, a display apparatus 2900 according to one embodiment of the present invention displays a guide message 2920 for inputting a keyword. And, a window 2930 enabling a user to directly input a keyword may be displayed as well.

In the course of performing the aforementioned operations 2920 and 2930, a broadcast screen 2910 currently watched by a user, as shown in FIG. 29, may be maintained as a background screen.

In the course of performing the aforementioned operations 2920 and 2930, the channel browsing screen 2850 is designed to be maintained as a background screen, which ma pertain to the scope of the appended claims and their equivalents of the present invention.

Finally, FIG. 29 assume that a user of the display apparatus 2900 searches a whole screen, on which a channel browsing is activated, for a channel of a current broadcast program having a keyword 'soccer'.

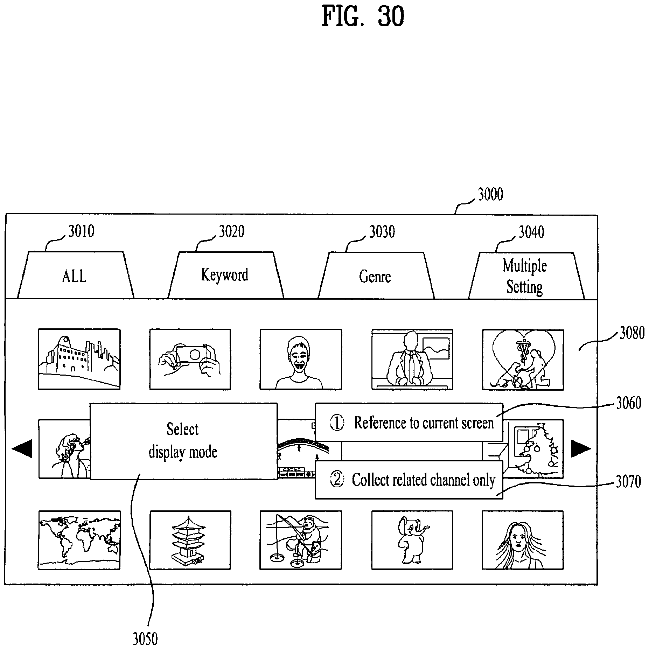

FIG. 30 is a diagram of a 2^{nd} OSD in case of selecting a keyword related option from the main screen shown in FIG. 28. In the following description, a 2^{nd} OSD in case of selecting a keyword related option from the main screen shown in FIG. 28 is explained with reference to FIG. 30.

First of all, FIG. 29 is used to describe an OSD for determining whether to sort a specific channel by a prescribed reference on a full screen having a channel browsing activated thereon. And, an OSD for determining 2 kinds of modes of displaying sorted specific channels is described with reference to FIG. 30 as follows.

Referring to FIG. 30, a display apparatus 3000 according to one embodiment of the present invention outputs a channel browsing screen 3080 and simultaneously displays tabs 3010, 3020, 3030 and 3040 for 4 kinds of modes.

In case that a user of the display apparatus 3000 applies a command signal via a specific menu or a shortcut key, a guide message 3050 for guiding a display mode is displayed.

In particular, for example, a 1^{st} mode 3060 of highlighting and displaying filtered channels on a full screen of a current channel browsing or a 2^{nd} mode 3070 of collecting and displaying filtered channels only is displayed. In particular, the 2^{nd} mode 3070 is discriminated from the 1^{st} mode in excluding unfiltered general channels from being displayed.

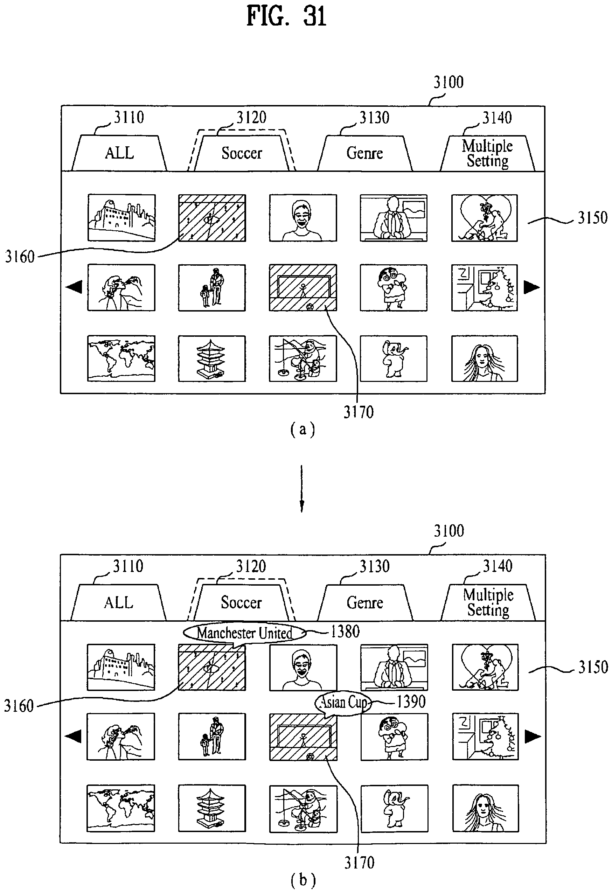

A user interface of the 1^{st} mode 3060 will be described in detail with reference to FIG. 31 later and a user interface of the 2^{nd} mode 3070 will be described in detail with reference to FIG. 32 later. FIG. 31 or FIG. 32 assumes a case that a keyword option is selected as a reference of filtering, by which the scope of the appended claims and their equivalents of the present invention may be non-limited. And, FIG. 31 or FIG. 32 may apply to a case of selecting a genre option or a multiple settings option similarly.

FIG. 31 is a diagram of a 3^{rd} OSD in case of selecting a keyword related option from the main screen shown in FIG. 28. In the following description, a 3^{rd} OSD in case of selecting a keyword related option from the main screen shown in FIG. 28 is explained with reference to FIG. 31. In particular, assume a case that the 1^{st} mode 3060 shown in FIG. 30 is additionally selected.

Referring to FIG. 31 (a), a display apparatus 3100 according to one embodiment of the present invention displays thumbnail images 3150 of broadcast programs currently outputted on the respective channels overall.

In doing so, if a user of the display apparatus 3100 selects the tab 3120 related to a keyword (e.g., soccer) from the aforementioned 4 tabs 3110, 3120, 3130 and 3140, specific channels 3160 and 3170, on which the broadcast programs related to the keyword 'soccer' are broadcasted, are highlighted and displayed on a current channel browsing screen 3150 [FIG. 31 (a)].

Moreover, if the user selects the tab 3120 related to the keyword (e.g., soccer) again, referring to FIG. 31 (b), detailed broadcast informations 3180 and 3190 on the specific channels 3160 and 3170 are additionally displayed, respectively. In particular, each of the detailed broadcast informations 3180 and 3190 may include title information of the corresponding broadcast program (or event) for example.

Although FIG. 31 shows an embodiment of displaying FIG. 31 (b) optionally on the assumption of FIG. 31 (a), another embodiment may be implemented in a manner of omitting FIG. 31 (a) and activating FIG. 31 (b) directly, which may pertain to the scope of the appended claims and their equivalents of the present invention.

Thus, if the configuration shown in FIG. 31 is designed, it may be able to solve the related art problem of manually checking broadcast programs currently broadcasted on the respective channels. And, it is advantageous in quickly checking a current broadcast program related to a user-desired keyword only and performing a channel switching for the checked broadcast program.

FIG. 32 is a diagram of a 4^{th} OSD in case of selecting a keyword related option from the main screen shown in FIG. 28. In the following description, a 4^{th} OSD in case of selecting a keyword related option from the main screen shown in FIG. 28 is explained with reference to FIG. 31. In particular, assume a case that the 2^{nd} mode 3070 shown in FIG. 30 is additionally selected.

Referring to FIG. 32 (a), if a user of a display apparatus 3200 selects the tab 3220 related to a keyword (e.g., soccer) from the aforementioned 4 tabs 3210, 3220, 3230 and 3240, specific channels 3250, 3260, 3270 and 3280, on which the broadcast programs related to the keyword 'soccer' are broadcasted, are collected and displayed.

The embodiment shown in FIG. 32 is different from such a solution shown in FIG. 31. In this case, the solution shown in FIG. 31 highlights the filtered channels only while displaying both of the filtered channels and the unfiltered channels on the current channel browsing screen. In particular, according to the design shown in FIG. 32, channels (e.g., limited to 15 channels) on a currently outputted channel browsing screen are not searched only, channels of programs having the related keyword are filtered off from all channels, and a totally different OSD is then outputted.

Moreover, if the user selects the tab related to the keyword (e.g., soccer) again, referring to FIG. 32 (b), detailed broadcast informations 3251, 3261, 3271 and 3281 on the filtered channels 3250, 3260, 3270 and 3280 are additionally displayed, respectively. In particular, each of the detailed broadcast informations 3251, 3261, 3271 and 3281 may include title information of the corresponding broadcast program (or event) for example.

Although FIG. 32 shows an embodiment of displaying FIG. 32 (b) optionally on the assumption of FIG. 32 (a), another embodiment may be implemented in a manner of omitting FIG. 32 (a) and activating FIG. 32 (b) directly, which may pertain to the scope of the appended claims and their equivalents of the present invention.

Thus, if the configuration shown in FIG. 32 is designed, since a keyword search result for all channels is provided irrespective of the maximum number (e.g., 15, etc.) of channels displayable on a current channel browsing screen, it is advantageous for a user not to go to a different channel browsing screen one by one.

FIG. 33 is a diagram of a 1^{st} OSD in case of selecting a genre related option from the main screen shown in FIG. 28. In the following description, a 1^{st} OSD in case of selecting a genre related option 2830 from the main screen shown in FIG. 28 is explained with reference to FIG. 33.

First of all, in consideration of a user who intends to check a channel filtered with a specific genre (e.g., a combination of a main genre and a sub-genre, etc.) on a general channel browsing screen, a display apparatus 3300 according to one embodiment of the present invention displays a guide message 3310 instructing to select a genre. And, a list 3320 of user-selectable main genres and a list 3330 of user-selectable sub-genres are displayed respectively. Of course, a user of the display apparatus 3300 may be able to select a main genre only without selecting a sub-genre, which may pertain to the scope of the appended claims and their equivalents of the present invention.

In the course of performing the aforementioned operations 3310, 3320 and 3330, referring to FIG. 33, a broadcast screen currently watched by a user may be maintained as a background screen.

In the course of performing the aforementioned operations 3310, 3320 and 3330, the channel browsing screen 2850 shown in FIG. 28 may be maintained as a background screen, which may pertain to the scope of the appended claims and their equivalents of the present invention.

Finally, in FIG. 33, assume that a full screen of a channel browsing activated by a user of the display apparatus 3300 is searched for a channel for a current broadcast program corresponding to a main genre 'drama' and a sub-genre 'sports drama' as filtering reference values.

FIG. 34 is a diagram of a 2^{nd} OSD in case of selecting a genre related option from the main screen shown in FIG. 28. In the following description, a 2^{nd} OSD in case of selecting a genre related option from the main screen shown in FIG. 28 is explained with reference to FIG. 34. In particular, assume that the 1^{st} mode 3060 shown in FIG. 30 is additionally selected.

Referring to FIG. 34 (a), a display apparatus 3400 according to one embodiment of the present invention displays thumbnail images of broadcast programs currently outputted on the respective channels overall.

In doing so, if a user of the display apparatus 3400 selects the tab 3430 related to a genre (e.g., sports drama) from the aforementioned 4 tabs 3410, 3420, 3430 and 3440, a specific channel 3450, on which the broadcast programs related to the genre 'sports drama' is broadcasted, is highlighted and displayed on a current channel browsing screen [FIG. 34 (a)].

Moreover, if the user selects the tab 3430 related to the genre (e.g., sports drama) again, referring to FIG. 34 (b), a detailed broadcast information 3460 on the specific channel 3450 is additionally displayed, respectively. In particular, the detailed broadcast information 3460 may include title information of the corresponding broadcast program (or event) for example.

Although FIG. 34 shows an embodiment of displaying FIG. 34 (b) optionally on the assumption of FIG. 34 (a), another embodiment may be implemented in a manner of omitting FIG. 34 (a) and activating FIG. 34 (b) directly, which may pertain to the scope of the appended claims and their equivalents of the present invention.

Thus, if the configuration shown in FIG. 34 is designed, it may be able to solve the related art problem of manually checking broadcast programs currently broadcasted on the respective channels. And, it is advantageous in quickly checking a current broadcast program related to a user-desired genre only and performing a channel switching for the checked broadcast program.

FIG. 35 is a diagram of a 3^{rd} OSD in case of selecting a genre related option from the main screen shown in FIG. 28. In the following description, a 3^{rd} OSD in case of selecting a genre related option from the main screen shown in FIG. 28 is explained with reference to FIG. 35. In particular, assume a case that the 2^{nd} mode 3070 shown in FIG. 30 is additionally selected.

Referring to FIG. 35 (a), if a user of a display apparatus 3500 selects the tab 3530 related to a genre (e.g., sports drama) from the aforementioned 4 tabs 3510, 3520, 3530 and 3540, specific channels 3550 and 3560, on which the broadcast programs related to the genre (e.g., sports drama) are broadcasted, are collected and displayed only.

The embodiment shown in FIG. 35 is different from such a solution shown in FIG. 34. In this case, the solution shown in FIG. 34 highlights the filtered channels only while displaying both of the filtered channels and the unfiltered channels on the current channel browsing screen. In particular, according to the design shown in FIG. 35, channels (e.g., limited to 15 channels) on a currently outputted channel browsing screen are not searched only, channels of programs corresponding to a specific genre are filtered off from all channels, and a totally different OSD is then outputted.

Moreover, if the user selects the tab related to the genre (e.g., sports drama) again, referring to FIG. 35 (b), detailed broadcast informations 3551 and 3561 on the filtered channels 3550 and 3560 are additionally displayed, respectively. In particular, each of the detailed broadcast informations 3551 and 3561 may include title information of the corresponding broadcast program (or event) for example.

Although FIG. 35 shows an embodiment of displaying FIG. 35 (b) optionally on the assumption of FIG. 35 (a), another embodiment may be implemented in a manner of omitting FIG. 35 (a) and activating FIG. 35 (b) directly, which may pertain to the scope of the appended claims and their equivalents of the present invention.

Thus, if the configuration shown in FIG. 35 is designed, since channels, on which broadcast programs of a specific genre are currently outputted, among all channels are displayed only irrespective of the maximum number (e.g., 15, etc.) of channels displayable on a current channel browsing screen, it is advantageous for a user not to go to a different channel browsing screen one by one.

FIG. 36 is a diagram of a 1^{st} OSD in case of selecting a multiple-setting related option from the main screen shown in FIG. 28. In the following description, a 1^{st} OSD in case of selecting a multiple-setting related option 2840 from the main screen shown in FIG. 28 is explained with reference to FIG. 36.

First of all, in the above-described drawings, a keyword related filtering and a genre related filtering are respectively performed. Yet, in case that a search is performed with either a key word or a genre only, numerous channels may appear excessively or noise channels substantially unexpected by a user may be included.

In order to reduce the above risks, the present invention intends to propose multiple-setting solutions.

First of all, a display apparatus 3600 according to one embodiment of the present invention displays a guide message 3610 instructing to select 3 items for multiple settings.

In particular, the guide message 3610 may be designed to contain a keyword option 3620, a main genre option 3630, a sub-genre option 3640 and the like.

In the course of processing the guide message 3610, referring to FIG. 36, a broadcast screen currently watched by a user may be maintained as a background screen. Alternatively, in the course of processing the guide message 3610, the channel browsing screen 2850 shown in FIG. 28 may be maintained as a background screen, which may pertain to the scope of the appended claims and their equivalents of the present invention.

Finally, assuming that a full screen of a channel browsing activated by a user of the display apparatus 3600 is searched for a channel for a current broadcast program corresponding to a keyword condition set to 'Michael Jordan', a main genre condition set to 'movie' and a sub-genre condition set to 'sports' as filtering reference values (not shown in detail in FIG. 36), the following drawings will be described.

FIG. 37 is a diagram of a 2^{nd} OSD in case of selecting a multiple-setting related option from the main screen shown in FIG. 28. In the following description, a 2^{nd} OSD in case of selecting a multiple-setting related option from the main screen shown in FIG. 28 is explained with reference to FIG. 37.

First of all, assume that a display apparatus 3700 according to one embodiment of the present invention is activating a channel browsing function. In doing so, if a tab 3740 indicating multiple settings is selected from 4 tabs 3710, 3720, 3730 and 3740 shown in FIG. 37, the display apparatus 3700 searches for channels on which broadcast programs matching the multiple-setting conditions are currently outputted, respectively.

In particular, using information on a current broadcast program received from a CP or a broadcast station, the display apparatus 3700, for example, the display apparatus 3700 filters a specific channel on which a specific broadcast program is being outputted only. In this case, the specific broadcast program belongs to a sports movie genre and additional information on Michael Jordan is inserted in the broadcast program.

The display apparatus 3700 shown in FIG. 37 is designed to display the filtered specific channel 3750 discriminated from other general channels in a manner of being highlighted.

Meanwhile, referring to FIG. 37, a result of a channel, on which a broadcast program perfectly matching the multiple-setting condition is currently outputted, is guided. Occasionally, a random user may attempt to check a channel on which a broadcast program partially matching the condition is outputted. In consideration of such a need, embodiments shown in FIGs. 38 to 40 are explained as follows.

FIG. 38 is a diagram of a detailed embodiment of a database necessary to activate a multiple-setting related option. In the following description, a detailed embodiment of a database necessary to activate a multiple-setting related option is explained with reference to FIG. 38.

First of all, the multiple-setting according to one embodiment of the present invention is based on 3 kinds of conditions (e.g., keyword, main genre and sub-genre). Yet, a prescribed broadcast program may fail in meeting all conditions but meet the conditions in part. Instead of determining this as noise, it may be necessary to display the result differentially to a user. To this end, a display apparatus includes a database designed as FIG. 38 or a determining module.

Referring to FIG. 38, since a channel, on which a broadcast program having keyword, main genre and sub-genre fully matched is currently broadcasted, has 100% of a matching rate, a top priority is given to the corresponding channel.

And, since a channel, on which a broadcast program having 2 of keyword, main genre and sub-genre partially matched is currently broadcasted, has 66% of a matching rate, a 2^{nd} priority is given to the corresponding channel.

Moreover, since a channel, on which a broadcast program having 1 of keyword, main genre and sub-genre partially matched is currently broadcasted, has 33% of a matching rate, a 3^{rd} priority is given to the corresponding channel.

A user interface configured to display channels respectively having different matching rates is described in detail with reference to FIG. 39 and FIG. 40 as follows.

FIG. 39 is a diagram of a 3^{rd} OSD in case of selecting a multiple-setting related option from the main screen shown in FIG. 28. In the following description, a 3^{rd} OSD in case of selecting a multiple-setting related option from the main screen shown in FIG. 28 is explained with reference to FIG. 39.

First of all, assume that a display apparatus 3900 shown in FIG. 39 has the aforementioned data shown in FIG. 38. In case that a channel browsing function is activated, the display apparatus 3900 may display 4 tabs 3910, 3920, 3930 and 3940.

In doing so, if a user of the display apparatus 3900 selects a specific tab 3940 related to a multiple-setting, a channel of top priority (100% of a matching rate) is displayed on a screen top region 3950 using the database shown in FIG. 38. And, a channel of 2^{nd} priority (66% of a matching rate) is displayed on a screen middle region 3960.

Moreover, a channel of 3^{rd} priority (33% of a matching rate) is displayed on a screen bottom region 3970. Besides, the present invention is **characterized in that** all channels having 0% of a matching rate are set to disappear from a channel browsing screen.

FIG. 40 is a diagram of a 4^{th} OSD in case of selecting a multiple-setting related option from the main screen shown in FIG. 28. In the following description, a 4^{th} OSD in case of selecting a multiple-setting related option from the main screen shown in FIG. 28 is explained with reference to FIG. 40.

First of all, assume that a display apparatus 4000 shown in FIG. 40 has the aforementioned data shown in FIG. 38. In case that a channel browsing function is activated, the display apparatus 4000 may display 4 tabs 4010, 4020, 4030 and 4040.

In doing so, if a user of the display apparatus 4000 selects a specific tab 4040 related to a multiple-setting, unlike FIG. 39, a current channel browsing screen is maintained intact according to an embodiment shown in FIG. 40. In particular, channels having 0% of a matching rate are not deleted but outputted together with the matched channels, thereby widening user's selection.

For instance, a channel of top priority (100% of a matching rate) is displayed as a widest channel region 4050 3950 using the database shown in FIG. 38. And, a channel of 2^{nd} priority (66% of a matching rate) is displayed as a medium-size channel region 4060.

Moreover, a channel of 3^{rd} priority (33% of a matching rate) is displayed as a smallest channel region 4070. Of course, the smallest channel region means that the corresponding channel is relatively small among the matched channels. And, the present invention is **characterized in that** the smallest channel region is set larger than an unmatched channel region.

Although the above description is made using different drawings for clarity, it may be able to implement a new embodiment by combining the embodiments described with reference to the drawings. And, it is apparent to those skilled in the art to design a recording medium readable by a computer in which programs for executing the above-mentioned embodiments are recorded. This pertains to the scope of the rights of the present invention.

The display apparatus and operating method thereof according to the aforementioned embodiments of this invention may be achieved by combination of structural elements and features of this invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of this invention.

Meanwhile, the display apparatus operating method according to this invention may be implemented in a recording medium readable by a processor provided to a display apparatus with processor-readable codes. The processor-readable media may include all kinds of recording devices in which data readable by a processor are stored. The processor-readable media may include ROM, RAM, CD-ROM, magnetic tapes, floppy discs, optical data storage devices, and the like for example and may also include carrier-wave type implementations (e.g., transmission via Internet). Moreover, the processor-readable recording medium may be distributed on network-connected computer systems to save and execute processor-readable codes by distributed processing.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.
And, both of the apparatus invention and the method invention are described in this specification. Moreover, the description of both inventions may be supplemented with each other.

## Claims

1. A method of controlling a display apparatus, which activates a channel browsing, comprising the steps of:
receiving A/V data of a broadcast program via a 1^{st} path of a broadcast network;
receiving at least one event information currently broadcasted on each channel and a per-channel thumbnail image corresponding to the event via a 2^{nd} path of an internet network;
displaying video data included in the received AV data on a 1^{st} region within a screen of the display apparatus;
displaying a 1^{st} OSD (on screen display) including the received per-channel thumbnail image on a second region within the screen;
collecting at least one event corresponding to a preset reference; and
displaying a 2^{nd} OSD on the 2^{nd} region within the screen to display a thumbnail image of a channel carrying the collected event and thumbnail images of the rest of channels in a manner of discriminating the thumbnail image of the channel carrying the collected event from the thumbnail images of the rest of the channels.

2. The method of claim 1, the collecting step comprising the steps of:
displaying at least one category for determining an event to collect; and
selectively detecting events having additional information corresponding to the determined category.

3. The method of claim 2, wherein the at least one category comprises at least one selected from the group consisting of a keyword, a main genre and a sub-genre.

4. The method of claim 3, if a plurality of categories are selected, the step of displaying the 2^{nd} OSD on the 2^{nd} region within the screen to display the thumbnail image of the channel carrying the collected event and the thumbnail images of the rest of the channels in a manner of discriminating the thumbnail image of the channel carrying the collected event from the thumbnail images of the rest of the channels, comprising the steps of:
giving a priority to each of the events in accordance with the number of matched categories among a plurality of the categories; and
differentially displaying the thumbnail image corresponding to the channel carrying the event in accordance with the given priority.

5. The method of claim 1, the step of displaying the 2^{nd} OSD on the 2^{nd} region within the screen to display the thumbnail image of the channel carrying the collected event and the thumbnail images of the rest of the channels in a manner of discriminating the thumbnail image of the channel carrying the collected event from the thumbnail images of the rest of the channels, comprising the step of simultaneously displaying the thumbnail image of the channel carrying the collected event and title information of the collected event.

6. A computer-readable recording medium, comprising a program for executing the method of one of claims 1 to 5, the program recorded in the computer-readable recording medium.

7. A display apparatus for activating a channel browsing, comprising:
a broadcast network interface receiving A/V data of a broadcast program via a 1^{st} path of a broadcast network;
an internet network interface receiving at least one event information currently broadcasted on each channel and a per-channel thumbnail image corresponding to the event via a 2^{nd} path of an internet network;
a display unit displaying video data included in the received AV data on a 1^{st} region within a screen of the display apparatus, the display unit displaying a 1^{st} OSD (on screen display) including the received per-channel thumbnail image on a second region within the screen;
a collector collecting at least one event corresponding to a preset reference;
and
a controller displaying a 2^{nd} OSD on the 2^{nd} region within the screen to display a thumbnail image of a channel carrying the collected event and thumbnail images of the rest of channels in a manner of discriminating the thumbnail image of the channel carrying the collected event from the thumbnail images of the rest of the channels.

8. The display apparatus of claim 7, wherein the display unit displays at least one category for determining an event to collect and wherein the collector selectively detects events having additional information corresponding to the determined category.

9. The display apparatus of claim 8, wherein the at least one category comprises at least one selected from the group consisting of a keyword, a main genre and a sub-genre.

10. The display apparatus of claim 9, wherein if a plurality of categories are selected, the controller gives a priority to each of the events in accordance with the number of matched categories among a plurality of the categories and differentially displays the thumbnail image corresponding to the channel carrying the event in accordance with the given priority.

11. The display apparatus of claim 7, wherein the controller controls title information of the collected event to be displayed in a manner of being overlaid on the thumbnail image of the channel carrying the collected event.
